(19) Europäisches Patentamt
European Patent Office
Office européen des brevets

(11) EP 3 865 493 B1

(12) EUROPEAN PATENT SPECIFICATION

(45) Date of publication and mention of the grant of the patent:
**16.08.2023 Bulletin 2023/33**

(21) Application number: **20157197.3**

(22) Date of filing: **13.02.2020**

(51) International Patent Classification (IPC):
***C07F 9/06*** (2006.01) ***C01B 25/06*** (2006.01)
***C07F 9/50*** (2006.01) ***C07F 9/54*** (2006.01)

(52) Cooperative Patent Classification (CPC):
**C07F 9/06; C01B 25/06; C07F 9/5004; C07F 9/5407**

# (54) A NOVEL METHOD OF PREPARING PHOSPHORUS-CONTAINING COMPOUNDS FROM ELEMENTAL PHOSPHORUS

NEUES VERFAHREN ZUR HERSTELLUNG VON PHOSPHORHALTIGEN VERBINDUNGEN AUS ELEMENTAREM PHOSPHOR

NOUVEAU PROCÉDÉ DE PRÉPARATION DE COMPOSÉS CONTENANT DU PHOSPHORE À PARTIR DE PHOSPHORE ÉLÉMENTAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.08.2021 Bulletin 2021/33**

(73) Proprietor: **Universität Regensburg**
**93053 Regensburg (DE)**

(72) Inventors:
- **WOLF, Robert**
  **93051 Regensburg (DE)**
- **SCOTT, Daniel**
  **Bath, UK, BA1 5NF (DE)**

(74) Representative: **Vossius & Partner**
**Patentanwälte Rechtsanwälte mbB**
**Siebertstrasse 3**
**81675 München (DE)**

(56) References cited:
- **BERND MATHIASCH ET AL: "Decamethyl-1[lambda]3,4[lambda]3-diphospha-2,3,5,6,7-pentastannabicyclo[2.2.1] heptane, a Bicyclic Compound Rich in Tin", ANGEWANDTE CHEMIE. INTERNATIONAL EDITION., vol. 17, no. 10, 1 October 1978 (1978-10-01), pages 767-768, XP055691946, DE ISSN: 0570-0833, DOI: 10.1002/anie.197807671**
- **BRANDI M. COSSAIRT ET AL: "Radical synthesis of trialkyl, triaryl, trisilyl and tristannyl phosphines from P4", NEW JOURNAL OF CHEMISTRY, vol. 34, no. 8, 1 January 2010 (2010-01-01), page 1533, XP55033114, ISSN: 1144-0546, DOI: 10.1039/c0nj00124d**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

# Description

## Technical Field

The present invention provides a method of preparing a phosphorus-containing compound represented by the formula $(R_3M)_nPH_{3-n}$ using a compound represented by the formula $R_3MH$ and elemental phosphorus as starting materials.

## Prior Art

Phosphorus is the twelfth most abundant element in the lithosphere, and one of the six 'biogenic elements' required in significant amounts by all living organisms. As such, phosphorus-containing compounds are ubiquitous in both nature and the environment, and the chemistry of phosphorus has played a key role in the development of the modern chemical industry. A significant proportion of the phosphate rock mined globally is used for the production of all commercially relevant organic phosphorus compounds, which find diverse uses throughout the chemical industry, and in applications ranging from flame retardants to plastic additives. In all cases, synthesis proceeds via initial electric-arc reduction of phosphate to white phosphorus ($P_4$; produced on > 1,000,000 t / year scale), a highly reactive molecular allotrope of elemental phosphorus (JOM (2007) 59: 17, doi: 10.1007/s 11837-007-0071-y).

Mathiasch and Dräger reported in Angew. Chem. Int. Ed. Engl., 1978, 17(10), pages 767 and 768, on decamethyl-1$\lambda^3$,4$\lambda^3$-diphospha-2,3,5,6,7-pentastanna-bicyclo[2.2.1]heptane as a bicyclic compound being rich in tin.

Current industrial methods for $P_4$ utilization involve reaction with chlorine gas to generate oxidized phosphorus chlorides (e.g. $PCl_3$, $PCl_6$, $POCl_3$) followed by displacement of chloride by suitable nucleophiles (Scheme 1, top). These methods suffer from significant drawbacks: most notable are the need to use highly toxic and corrosive $Cl_2$ gas, and the formation of copious quantities of chlorinated waste. Furthermore, the intermediate phosphorus chlorides are themselves typically highly corrosive and difficult to handle, and their onward functionalization often requires further hazardous reagents (e.g. $PPh_3$ is produced from $PCl_3$ and PhCl by reaction with pyrophoric Na metal). As such, there is a strong motivation to develop alternative methods that can convert $P_4$ more directly into useful P-containing compounds, using more convenient reagents, and avoiding the need for phosphorus chloride intermediates (Scheme 1, bottom).

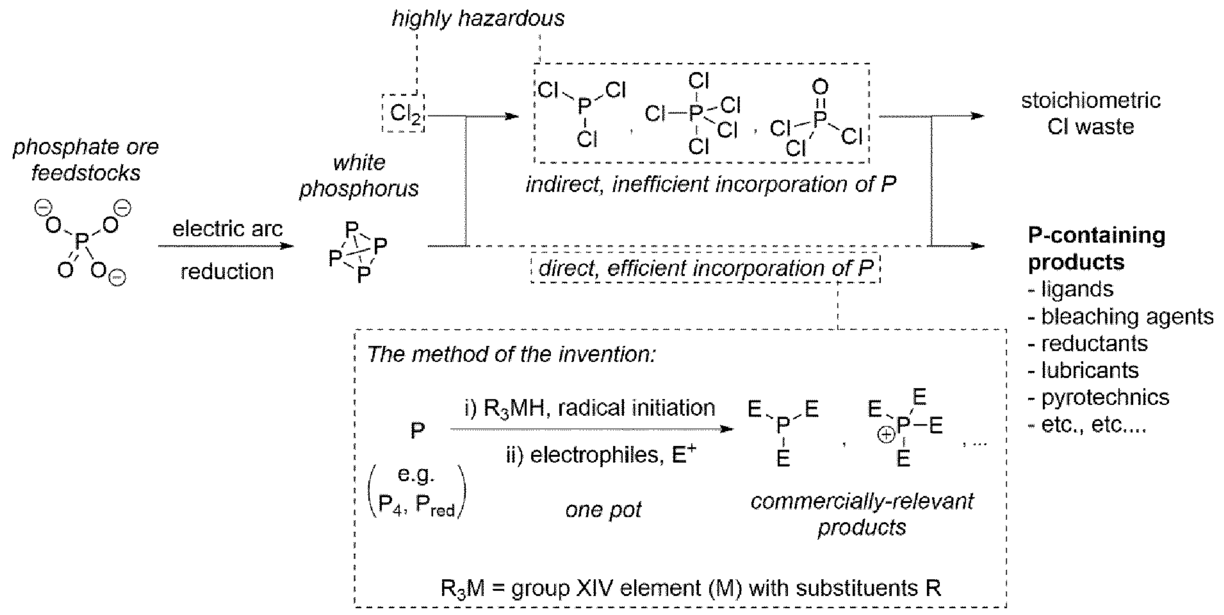


**Scheme 1:** Comparison of prior art routes for the production of P-containing products and the method of the present invention.

In recent years there has been much academic interest in the reductive (rather than oxidative, as in industry) functionalization of $P_4$ (Chem. Rev. 2010, 110, 7, 4164-4177, doi: 10.1021/cr9003709; Chem. Rev.2010, 110, 7, 4178-4235, doi: 10.1021/cr900349u; Chem. Rev. 2010, 110, 7, 4236-4256, doi: 10.1021/cr100010e). Typically, this

involves reaction with low-valent transition metal (or, less commonly, f-block or p-block) complexes; however, while these studies have led to numerous important academic breakthroughs, they are currently far from being industrially feasible. More practical methods for reductive functionalization of elemental phosphorus involve reaction with highly reducing alkali metals (e.g. Na/K alloy) to give simple phosphides (e.g. $Na_3P$, $NaPH_2$) which can then be treated with various electrophiles. These reactions do find use in academic laboratories, but the involvement of highly reactive, pyrophoric reagents (both the alkali metal reagents and the phosphide products are extremely hazardous) makes them industrially unattractive (as well as limiting the scope of compatible electrophiles).

C. C. Cummins et al. describe the stannylphosphide anion reagent sodium bis(triphenyl-stannyl) phosphide: synthesis, structural characterization, and reactions with indium, tin, and gold electrophiles in Inorg. Chem. 2014, 53, 3678-3687, doi: 10.1021/ic403178j.

WO 2013/114311 discloses a certain method for preparing tertiary phosphines and derivatives thereof.

Red phosphorus ($P_{red}$) is an alternative starting material for the production of phosphorus compounds. $P_{red}$ is prepared industrially by polymerisation of $P_4$, and so the use of $P_{red}$ instead of $P_4$ effectively adds a step to any synthetic procedure. However, whereas $P_4$ is a pyrophoric solid that reacts violently with $O_2$ and must be manipulated with corresponding care, $P_{red}$ is very stable and easy to handle, and therefore a much more attractive starting material for many applications.

Because of its low reactivity, examples of successful functionalisation of $P_{red}$ are extremely rare (even more so than for $P_4$), and largely limited to reduction with extremely powerful (and pyrophoric) alkali metal reagents (Na/K) to generate the corresponding phosphide salts $(Na/K)_3P$ (which are also pyrophoric).

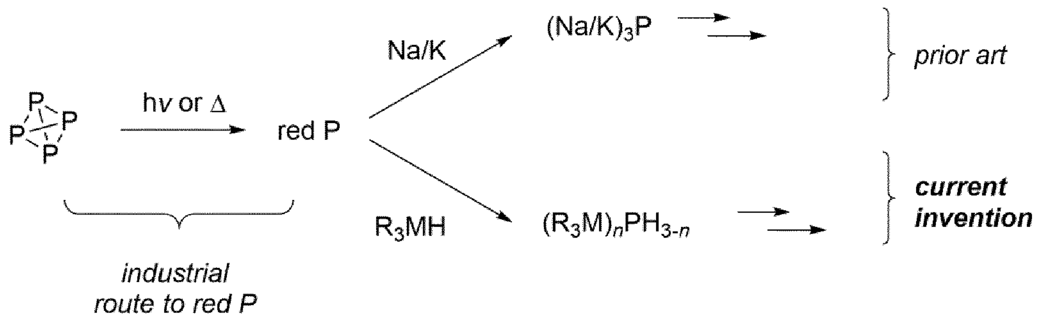


**Scheme 2:** Comparison of prior art routes and the method of the present invention for the functionalisation of $P_{red}$.

### Definitions

Unless defined otherwise the following definitions apply.

As used herein, "$C_{1-6}$ alkyl" is any saturated linear or branched alkyl group having 1 to 6 carbon atoms. Examples thereof include methyl, ethyl, propyl, isopropyl, n-butyl, sec-butyl, tert-butyl, pentyl and hexyl.

"Cycloalkyl" refers to a cyclic version of alkyl. The term "cycloalkyl" is also meant to include bicyclic, tricyclic and polycyclic versions thereof. Unless specified otherwise, the cycloalkyl group can have 5 to 10 carbon atoms.

"$C_{6-10}$ Aryl" refers to an aromatic mono- or polycyclic ring containing 6 to 10 carbon atoms. Examples are phenyl or naphthyl, preferably phenyl.

"5- to 10-membered heteroaryl" refers to a 5- to 10-membered aromatic ring wherein one or more of the carbon atoms in the ring have been replaced by one or more of the same or different heteroatoms, whereby the heteroatoms are selected from O, N and S. Examples of the heteroaryl group include pyrrole, furan, thiophene, imidazole, pyrazole, oxazole, thiazole, pyridine, pyridazine, pyrimidine and pyrazine.

"5- to 10-membered heterocyclyl" refers to a 5- to 10-membered non-aromatic ring wherein one or more of the carbon atoms in the ring have been replaced by one or more of the same or different heteroatoms, whereby the heteroatoms are selected from O, N and S. Examples of the heterocyclyl group include pyrrolidine, pyrroline, pyrazolidine, pyrazoline, imidazolidine, imidazoline, oxolane, dioxolane, tetrahydrothiophene, oxazolidine, piperidine, morpholine, piperazine, tetrahydropyran, pyran, dioxane, thiane and dithiane.

Alkylene, cycloalkylene, arylene, heteroarylene and heterocyclylene refer to the corresponding divalent moieties of the moieties defined above.

"Halogen" represents F, Cl, Br and I.

If a compound or moiety is referred to as being "optionally substituted", it can in each instance include 1 or more of the indicated substituents, whereby the substituents can be the same or different.

**Summary of the Invention**

The present invention relates to a method of preparing a phosphorus-containing compound represented by the formula $(R_3M)_nPH_{3-n}$, the method comprising:

reacting elemental phosphorus with a compound represented by the formula $R_3MH$ to provide the phosphorus-containing compound represented by the formula $(R_3M)_nPH_{3-n}$,
wherein
R is independently selected from the group consisting of H, $C_{1-6}$ alkyl, $C_{6-10}$ aryl, 5- to 10-membered heteroaryl, $C_{5-10}$ cycloalkyl, 5- to 10-membered heterocyclyl, OH, $OC_{1-6}$ alkyl, $OC_{6-10}$ aryl, O-(5- to 10-membered heteroaryl), O-($C_{5-10}$ cycloalkyl), O-(5- to 10-membered heterocyclyl), O-$MR^1_3$, $C_{1-6}$ alkylene-$C_{6-10}$ aryl, $C_{1-6}$ alkylene-(5- to 10-membered heteroaryl), $C_{1-6}$ alkylene-($C_{5-10}$ cycloalkyl), $C_{1-6}$ alkylene-(5- to 10-membered heterocyclyl), $C_{6-10}$ arylene-$C_{1-6}$ alkyl, 5- to 10-membered heteroarylene-$C_{1-6}$ alkyl, $C_{5-10}$ cycloalkylene-$C_{1-6}$ alkyl, 5- to 10-membered heterocyclylene-$C_{1-6}$ alkyl, Si($C_{1-6}$ alkyl)$_p$($C_{6-10}$ aryl)$_q$(5- to 10-membered heteroaryl),($C_{5-10}$ cycloalkyl)$_s$(5- to 10-membered heterocyclyl)$_t$, wherein $p + q + r + s + t = 3$, N($C_{1-6}$ alkyl)$_u$($C_{6-10}$ aryl)$_v$(5- to 10-membered heteroaryl)$_w$($C_{5-10}$ cycloalkyl)$_x$(5- to 10-membered heterocyclyl)$_y$, wherein $u + v + w + x + y = 2$;
**$R^1$** is independently selected from the group consisting of H, $C_{1-6}$ alkyl, $C_{6-10}$ aryl, 5- to 10-membered heteroaryl, $C_{5-10}$ cycloalkyl, 5- to 10-membered heterocyclyl, OH, $OC_{1-6}$ alkyl, $OC_{6-10}$ aryl, O-(5- to 10-membered heteroaryl), O-($C_{5-10}$ cycloalkyl), O-(5- to 10-membered heterocyclyl), $C_{1-6}$ alkylene-$C_{6-10}$ aryl, $C_{1-6}$ alkylene-(5- to 10-membered heteroaryl), $C_{1-6}$ alkylene-($C_{5-10}$ cycloalkyl), $C_{1-6}$ alkylene-(5- to 10-membered heterocyclyl), $C_{6-10}$ arylene-$C_{1-6}$ alkyl, 5- to 10-membered heteroarylene-$C_{1-6}$ alkyl, $C_{5-10}$ cycloalkylene-$C_{1-6}$ alkyl, 5- to 10-membered heterocyclylene-$C_{1-6}$ alkyl, Si($C_{1-6}$ alkyl)$_p$($C_{6-10}$ aryl)$_q$(5- to 10-membered heteroaryl),($C_{5-10}$ cycloalkyl)$_s$(5- to 10-membered heterocyclyl)$_t$, wherein $p + q + r + s + t = 3$, N($C_{1-6}$ alkyl)$_u$($C_{6-10}$ aryl)$_v$(5- to 10-membered heteroaryl)$_w$($C_{5-10}$ cycloalkyl)$_x$(5- to 10-membered heterocyclyl)$_y$, wherein $u + v + w + x + y = 2$;
wherein

in R and $R^1$, $C_{1-6}$ alkyl can be optionally substituted by halogen, $OR^2$, $COR^2$, $COOR^2$, $CONR^2_2$ or $NR^2_2$ or wherein the alkyl carbon chain can be optionally interrupted by one or more -O-;
in R and $R^1$, $C_{6-10}$ aryl, 5- to 10-membered heteroaryl, $C_{5-10}$ cycloalkyl and 5- to 10-membered heterocyclyl can be optionally substituted by halogen, $C_{1-6}$ alkyl, $C_{6-10}$ aryl, $C_{5-10}$ cycloalkyl, $OR^2$, $COR^2$, $COOR^2$, $CONR^2_2$ or $NR^2_2$;
if several like ($C_{1-6}$ alkyl), ($C_{6-10}$ aryl), (5- to 10-membered heteroaryl), ($C_{5-10}$ cycloalkyl) or (5- to 10-membered heterocyclyl) groups are present in Si($C_{1-6}$ alkyl)$_p$($C_{6-10}$ aryl)$_q$(5-to 10-membered heteroaryl),($C_{5-10}$ cycloalkyl)$_s$(5- to 10-membered heterocyclyl)$_t$ or N($C_{1-6}$ alkyl)$_u$($C_{6-10}$ aryl)$_v$(5- to 10-membered heteroaryl)$_w$($C_{5-10}$ cycloalkyl)$_x$(5- to 10-membered heterocyclyl)$_y$ they can be the same or different;

**$R^2$** is independently selected from the group consisting of H, $C_{1-6}$ alkyl, $C_{6-10}$ aryl and $C_{5-10}$ cycloalkyl;
**M** is selected from the group consisting of Sn, Si and Ge; and
**n** is 0, 1, 2 and/or 3;
wherein the reaction is conducted under electromagnetic irradiation having a wavelength in the range of 100 nm to 500 nm and/or in the presence of a radical initiator.

Thus, the present invention provides a new, very simple methodology for the reductive transformation of elemental phosphorus into useful phosphorus-containing species. The reaction is particularly advantageous because it readily proceeds under mild conditions. The resultant phosphorus-containing compounds represented by the formula $(R_3M)_nPH_{3-n}$ are reactive nucleophiles, and can be reacted with various compounds such as electrophiles to produce a wide variety of useful products. The concomitant $R_3MX$ by-products can be reduced to regenerate the initial $R_3MH$ reductant, thereby creating a synthetic cycle.

The phosphorus-containing compound represented by the formula $(R_3M)_nPH_{3-n}$ has a high stability when M = Sn and is thus easy to handle. Unlike other "$P^{3-}$" synthons (such as pyrophoric $P(SiMe_3)_3$), the phosphorus compound represented by the formula $(R_3Sn)_nPH_{3-n}$ is stable to moisture and other hydroxylic functionalities, and can even be dissolved in alcohol solvents such as EtOH without decomposition. Furthermore, it shows appreciable stability against oxidation in air.

## Detailed description

### Synthesis of the phosphorus-containing compound represented by the formula $(R_3M)_nPH_{3-n}$

The present invention relates to a method of preparing a phosphorus-containing compound represented by the formula $(R_3M)_nPH_{3-n}$, the method comprising:

reacting elemental phosphorus with a compound represented by the formula $R_3MH$ to provide the phosphorus-containing compound represented by the formula $(R_3M)_nPH_{3-n}$,
wherein
the reaction is conducted under electromagnetic irradiation having a wavelength in the range of 100 nm to 500 nm and/or in the presence of a radical initiator.

Any allotrope of elemental phosphorus may be used, but preferably white phosphorus ($P_4$) or red phosphorus ($P_{red}$) and most preferably white phosphorus ($P_4$) are employed.

In this reaction, the compound represented by the formula $R_3MH$ is used as a starting material. The compound represented by the formula $R_3MH$ can be provided as such or can be generated *in situ* from an appropriate precursor such as $R_3MCl$, $R_3MBr$, $R_3MI$, $R_3MOC_{1-6}$ alkyl, $R_3MOC_{6-10}$ aryl or $(R_3M)_2O$.

The moiety R is independently selected from the group consisting of H, $C_{1-6}$ alkyl, $C_{6-10}$ aryl, 5- to 10-membered heteroaryl, $C_{5-10}$ cycloalkyl, 5- to 10-membered heterocyclyl, OH, $OC_{1-6}$ alkyl, $OC_{6-10}$ aryl, O-(5- to 10-membered heteroaryl), O-($C_{5-10}$ cycloalkyl), 0-(5- to 10-membered heterocyclyl), O-$MR^1_3$, $C_{1-6}$ alkylene-$C_{6-10}$ aryl, $C_{1-6}$ alkylene-(5- to 10-membered heteroaryl), $C_{1-6}$ alkylene-($C_{5-10}$ cycloalkyl), $C_{1-6}$ alkylene-(5- to 10-membered heterocyclyl), $C_{6-10}$ arylene-$C_{1-6}$ alkyl, 5- to 10-membered heteroarylene-$C_{1-6}$ alkyl, $C_{5-10}$ cycloalkylene-$C_{1-6}$ alkyl, 5- to 10-membered heterocyclylene-$C_{1-6}$ alkyl, Si($C_{1-6}$ alkyl)$_p$($C_{6-10}$ aryl)$_q$(5- to 10-membered heteroaryl),($C_{5-10}$ cycloalkyl)$_s$(5- to 10-membered heterocyclyl)$_t$, wherein $p + q + r + s + t = 3$, N($C_{1-6}$ alkyl)$_u$($C_{6-10}$ aryl)$_v$(5- to 10-membered heteroaryl)$_w$($C_{5-10}$ cycloalkyl)$_x$(5- to 10-membered heterocyclyl)$_y$, wherein $u + v + w + x + y = 2$. In a preferred embodiment, the moiety R is selected from the group consisting of H, $C_{1-6}$ alkyl and $C_{6-10}$ aryl, more preferably R is selected from the group consisting of H, butyl and phenyl.

$R^1$ is independently selected from the group consisting of H, $C_{1-6}$ alkyl, $C_{6-10}$ aryl, 5- to 10-membered heteroaryl, $C_{5-10}$ cycloalkyl, 5- to 10-membered heterocyclyl, OH, $OC_{1-6}$ alkyl, $OC_{6-10}$ aryl, O-(5- to 10-membered heteroaryl), O-($C_{5-10}$ cycloalkyl), O-(5- to 10-membered heterocyclyl), $C_{1-6}$ alkylene-$C_{6-10}$ aryl, $C_{1-6}$ alkylene-(5- to 10-membered heteroaryl), $C_{1-6}$ alkylene-($C_{5-10}$ cycloalkyl), $C_{1-6}$ alkylene-(5- to 10-membered heterocyclyl), $C_{6-10}$ arylene-$C_{1-6}$ alkyl, 5- to 10-membered heteroarylene-$C_{1-6}$ alkyl, $C_{5-10}$ cycloalkylene-$C_{1-6}$ alkyl, 5- to 10-membered heterocyclylene-$C_{1-6}$ alkyl, Si($C_{1-6}$ alkyl)$_p$($C_{6-10}$ aryl)$_q$(5- to 10-membered heteroaryl)$_r$($C_{5-10}$ cycloalkyl)$_s$(5- to 10-membered heterocyclyl)$_t$, wherein $p + q + r + s + t = 3$, N($C_{1-6}$ alkyl)$_u$($C_{6-10}$ aryl)$_v$(5- to 10-membered heteroaryl)$_w$($C_{5-10}$ cycloalkyl)$_x$(5- to 10-membered heterocyclyl)$_y$, wherein $u + v + w + x + y = 2$.

Preferably $R^1$ is independently selected from the group consisting of H, $C_{1-6}$ alkyl and $C_{6-10}$ aryl, more preferably $R^1$ is selected from the group consisting of H, butyl and phenyl.

In the above definition of R and $R^1$, $C_{1-6}$ alkyl can be optionally substituted one or more times by halogen, $OR^2$, $COR^2$, $COOR^2$, $CONR^2_2$ or $NR^2_2$ and the alkyl carbon chain can be optionally interrupted by one or more -O-.

In the above definition of R and $R^1$, $C_{6-10}$ aryl, 5- to 10-membered heteroaryl, $C_{5-10}$ cycloalkyl and 5- to 10-membered heterocyclyl can be optionally substituted by halogen, $C_{1-6}$ alkyl, $C_{6-10}$ aryl, $C_{5-10}$ cycloalkyl, $OR^2$, $COR^2$, $COOR^2$, $CONR^2_2$ or $NR^2_2$.

It is understood that if several like ($C_{1-6}$ alkyl), ($C_{6-10}$ aryl), (5- to 10-membered heteroaryl), ($C_{5-10}$ cycloalkyl) or (5- to 10-membered heterocyclyl) groups are present in Si($C_{1-6}$ alkyl)$_p$($C_{6-10}$ aryl)$_q$(5- to 10-membered heteroaryl)$_r$($C_{5-10}$ cycloalkyl)$_s$(5- to 10-membered heterocyclyl)$_t$ or N($C_{1-6}$ alkyl)$_u$($C_{6-10}$ aryl)$_v$(5- to 10-membered heteroaryl)$_w$($C_{5-10}$ cycloalkyl)$_x$(5- to 10-membered heterocyclyl)$_y$ they can be the same or different.

$R^2$ is independently selected from the group consisting of H, $C_{1-6}$ alkyl, $C_{6-10}$ aryl and $C_{5-10}$ cycloalkyl.

M is selected from the group consisting of Sn, Si and Ge, preferably M is Sn.

If M is Sn, the moiety R is preferably selected from the group consisting of $C_{1-6}$ alkyl and $C_{6-10}$ aryl; more preferably the moiety R is selected from the group consisting of $C_{1-4}$ alkyl and phenyl; even more preferably R is butyl or phenyl because $Bu_3SnH$ and $Ph_3SnH$ are commercially available.

If M is Si, the moiety R is preferably $(CH_3)_3Si$.

If M is Ge, the moiety R is preferably selected from the group consisting of $C_{1-6}$ alkyl and $C_{6-10}$ aryl; more preferably the moiety R is selected from the group consisting of $C_{1-4}$ alkyl and phenyl; even more preferably R is butyl or phenyl.

n is 0, 1, 2 and/or 3, preferably n is 1 and/or 2. This means that the resultant compounds are $PH_3$, $(R_3M)PH_2$, $(R_3M)_2PH$, and/or $(R_3M)_3P$. Typically, the resultant compounds are $(R_3M)PH_2$ and/or $(R_3M)_2PH$. If desired, these com-

pounds can be separated from one another by techniques such as distillation or fractional crystallization. However, since all of the compounds $PH_3$, $(R_3M)PH_2$, $(R_3M)_2PH$, and $(R_3M)_3P$ usually produce identical products upon treatment with the same electrophile, it is not normally necessary to separate them. In a preferred embodiment, the desired subsequent reaction of the compounds $PH_3$, $(R_3M)PH_2$, $(R_3M)_2PH$, and/or $(R_3M)_3P$ can be performed directly using an unseparated mixture of the compounds. Thus providing direct access to the target products in a single-step, 'one pot' manner, directly from elemental phosphorus (Scheme 2).

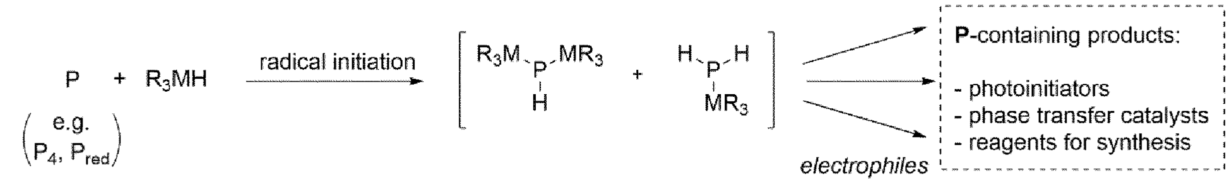


**Scheme 3:** General method of the present invention

The reaction is conducted under electromagnetic irradiation having a wavelength in the range of 100 nm to 500 nm and/or in the presence of a radical initiator.

In one option, the reaction is conducted under electromagnetic irradiation having a wavelength in the range of 100 nm to 500 nm. The wavelength is preferably 200 nm to 500 nm, more preferably 250 nm to 460 nm. The light intensity will vary depending on the experimental apparatus, but for batch reactions is typically in the range of about 1 kW to about 100 kW per mole of $R_3MH$ in the reaction mixture, and preferably in the range of about 5 kW to about 25 kW per mole of $R_3MH$ in the reaction mixture. The temperature at which the reaction is performed can vary, e.g., depending on the solvent which is used. If electromagnetic irradiation is employed, the reaction is typically conducted at a temperature in the range of about 0 °C to about 50 °C, preferably 0 to 40 °C, more preferably at 10 °C to 30 °C, even more preferably at 20 °C to 30 °C.

In another embodiment, the reaction is conducted in the presence of a radical initiator. The radical initiator is not particularly limited and can be chosen from any known type of radical initiator. Examples thereof include stable radicals such as (2,2,6,6-tetramethylpiperidin-1-yl)oxidanyl (TEMPO). Thermal radical initiators or photoinitators are also suitable. Examples of thermal radical initiators include 2,2'-azobisisobutyronitrile (AIBN), tert-amyl peroxybenzoate, 4,4-azobis(4-cyanovaleric acid), 1,1'-azobis(cyclohexanecarbonitrile) (ACN), benzoyl peroxide, 2,2-bis(tert-butylperoxy)butane, 1,1-bis(tert-butylperoxy)cyclohexane, 2,5-bis(tert-butylperoxy)-2,5-dimethylhexane, 2,5-bis(tert-butylperoxy)-2,5-dimethyl-3-hexyne, bis(1-(tert-butylperoxy)-1-methylethyl)benzene, 1,1-bis(tert-butylperoxy)-3,3,5-trimethylcyclohexane, tert-butyl hydroperoxide, tert-butyl peracetate, tert-butyl peroxide, tert-butyl peroxybenzoate, tert-butylperoxy isopropyl carbonate, cumene hydroperoxide, cyclohexanone peroxide, dicumyl peroxide, lauroyl peroxide, 2,4-pentanedione peroxide, peracetic acid, and potassium persulfate. Examples of photoinitiators include acetophenone, anisoin, anthraquinone, anthraquinone-2-sulfonate sodium, (benzene)tricarbonylchromium, benzil, benzoin, benzoin ethyl ether, benzoin isobutyl ether, benzoin methyl ether, benzophenone, 3,3',4,4'-benzophenonetetracarboxylic acid dianhydride, 4-benzoylbiphenyl, 2-benzyl-2-(dimethylamino)-4'-morpholinobutyrophenone, 4,4'-bis(diethylamino)benzophenone, 4,4'-bis(dimethylamino)benzophenone, camphorquinone, 2-chlorothioxanthen-9-one, (cumene)cyclopentadienyliron(II) hexafluorophosphate, dibenzosuberenone, 2,2-diethoxyacetophenone, 4,4'-dihydroxybenzophenone, 2,2-dimethoxy-2-phenylacetophenone, 4-(dimethylamino)benzophenone, 4,4'-dimethylbenzil, 2,5-dimethylbenzophenone, 3,4-dimethylbenzophenone, diphenyl(2,4,6-trimethylbenzoyl)phosphine oxide, 4'-ethoxyaceto-phenone, 2-ethylanthroquinone, ferrocene, 3'-hydroxyacetophenone, 4'-hydroxyacetophenone, 3-hydroxybenzophenone, 4-hydroxybenzophenone, 1-hydroxycyclohexyl phenyl ketone, 2-hydroxy-2-methylpropiophenone, 2-methylbenzophenone, 3-methylbenzophenone, methyl benzoylformate, 2-methyl-4'-(methylthio)-2-morpholinopropiophenone, phenanthrene-quinone, 4'-phenoxyacetophenone, thioxanthen-9-one and (4-phenylthiophenyl)diphenyl-sulfonium hexafluorophosphate. 1,1'-Azobis(cyclohexanecarbonitrile) and AIBN are preferred initiators. The temperature at which the reaction is performed can vary depending on the solvent and initiator which are used but will typically be in the range of about 0 °C to about 150 °C, preferably in the range of about 20 °C to about 100 °C, and more preferably in the range of about 30 °C to about 80 °C.

The ratio of $R_3MH$ to initiator is not particularly limited and can be from about 1:1 to about 10000:1, and preferably from about 20:1 to about 650:1. For the specific case where the initiator is AIBN or ACN the ratio is typically from about 10:1 to about 10000:1, and preferably from about 20:1 to about 650:1.

The ratio of elemental phosphorus to the compound represented by the formula $R_3MH$ is not particularly limited and can depend on the allotrope employed. Typically, the molar ratio of elemental phosphorus atoms to compound represented by the formula $R_3MH$ will about 30:1 to about 1:3, more preferably about 12:1 to about 1:2.

In the case where $P_4$ is used the ratio of elemental phosphorus atoms (i.e. four times the amount of white phosphorus $P_4$) to the compound represented by the formula $R_3MH$ is not particularly limited. Typically, the molar ratio of elemental phosphorus atoms (i.e. four times the amount of white phosphorus $P_4$) to compound represented by the formula $R_3MH$ will be about 15:1 to about 1:3, more preferably about 12:1 to about 1:2.

In the case where $P_{red}$ is used the ratio of red phosphorus $P_{red}$ to the compound represented by the formula $R_3MH$ is not particularly limited. Typically, the molar ratio of red phosphorus $P_{red}$ to compound represented by the formula $R_3MH$ will be about 30:1 to about 2:3, more preferably about 10:1 to about 2:3.

The reaction is typically performed in an organic solvent. The type of solvent is not particularly limited and both protic and aprotic solvents can be employed. Possible solvents include aliphatic organic solvents (such as $C_{5-8}$ alkanes), aromatic organic solvents (such as benzene and toluene), ethers (such as diethyl ether and tetrahydrofuran), and alcohols (such as $C_{1-4}$ alcohols like ethanol, propanol, butanol). Preferred solvents are toluene, benzene and ethanol. Since a wide variety of solvents can be employed, it is possible to choose the solvent based on the subsequent reaction in which the phosphorus-containing compound represented by the formula $(R_3M)_nPH_{3-n}$ is to be employed. Thus, a step in which the solvent is removed is not necessary which significantly simplifies synthetic procedures and reduces their costs.

The amount of elemental phosphorus atoms in the solvent (dissolved or suspended) can depend on the allotrope employed and is typically in the range of about 0.01 mmol per mL to about 3 mmol per mL. When using white phosphorus $P_4$ the concentration of elemental phosphorus atoms (i.e. four times the concentration of $P_4$) in the solvent is typically in the range of about 0.01 mmol per mL to about 0.5 mmol per mL, preferably of about 0.06 mmol per mL to about 0.2 mmol per mL. When using $P_{red}$ the amount suspended in the solvent is typically in the range of about 0.05 mmol per mL to about 3 mmol per mL, and preferably about 0.2 mmol per mL to about 1 mmol per mL.

The concentration of the compound represented by the formula $R_3MH$ in the solvent is typically in the range of about 0.01 mmol per mL to about 0.6 mmol per mL, preferably of about 0.01 mmol per mL to about 0.16 mmol per mL.

The duration of the reaction will depend, e.g., on the type of phosphorus, the wavelength of the irradiation, the type of initiator and the temperature, but is typically in the range of about 10 minutes to about 10 days, more typically about 10 minutes to about 10 days, even more typically about 1 hour to about 10 days. The completion of the reaction and thus its duration can be checked, e.g., by $^{31}P$ NMR spectroscopy. When using $P_4$ the duration of the reaction is often in the range of about 10 minutes to about 36 hours, more typically about 1 hour to about 24 hours. When using $P_{red}$ it is often in the range of about 1 day to about 10 days, more typically about 3 days to about 10 days.

**Applications of the phosphorus-containing compound represented by the formula $(R_3M)_nPH_{3-n}$**

The phosphorus-containing compound represented by the formula $(R_3M)_nPH_{3-n}$ can be used in a wide variety of industrially and commercially relevant reactions for preparing phosphorus-containing compounds in which previously "$P^{3-}$" synthons (such as $P(SiMe_3)_3$) have been employed. In these reactions the phosphorus-containing compound represented by the formula $(R_3M)_nPH_{3-n}$ can be further reacted with a compound (such as an electrophile) represented by the formula R*X to provide a compound represented by the formula $R_3MX$ and a phosphorus compound represented by the formula $PR^*{}_mH_{3-m}$ or $P(R^*)_4{}^+X^-$ (m = 1 to 3).

R* is an electrophilic moiety. The type of electrophile is not particularly limited and a wide variety of different compounds can be used. Examples of possible electrophilic moieties include $C_{1-6}$ alkyl, $C_{6-10}$ aryl, $C_{1-6}$ alkylene-$C_{6-10}$ aryl, $C_{6-10}$ arylene-$C_{1-6}$ alkyl, 5- to 10-membered heteroaryl, $C_{1-6}$ alkylene-(5- to 10 membered heteroaryl), 5- to 10 membered heteroarylene-$C_{1-6}$ alkyl, $C_{5-10}$ cycloalkyl, $C_{1-6}$ alkylene-$C_{5-10}$ cycloalkyl, $C_{5-10}$ cycloalkyl-$C_{1-6}$ alkyl, 5- to 10 membered heterocyclyl, $C_{1-6}$ alkylene-5- to 10 membered heterocyclyl, 5- to 10 membered heterocyclyl-$C_{1-6}$ alkyl, $Si(C_{1-6}\ alkyl)_p(C_{6-10}\ aryl)_q$(5- to 10-membered heteroaryl),$(C_{5-10}\ cycloalkyl)_s$(5- to 10-membered heterocyclyl)$_t$, wherein p + q + r + s + t = 3, $Ge(C_{1-6}\ alkyl)_p(C_{6-10}\ aryl)_q$(5- to 10-membered heteroaryl)$_r$$(C_{5-10}\ cycloalkyl)_s$(5- to 10-membered heterocyclyl)$_t$, wherein p + q + r + s + t = 3, $Sn(C_{1-6}\ alkyl)_p(C_{6-10}\ aryl)_q$(5- to 10-membered heteroaryl),$(C_{5-10}\ cycloalkyl)_s$(5- to 10-membered heterocyclyl)$_t$, wherein p + q + r + s + t = 3, $P(C_{1-6}\ alkyl)_u(C_{6-10}\ aryl)_v$(5- to 10-membered heteroaryl)$_w$$(C_{5-10}\ cycloalkyl)_x$(5- to 10-membered heterocyclyl)$_y$, wherein u + v + w + x + y = 2, $B(C_{1-6}\ alkyl)_u(C_{6-10}\ aryl)_v$(5- to 10-membered heteroaryl)$_w$$(C_{5-10}\ cycloalkyl)_x$(5- to 10-membered heterocyclyl)$_y$, wherein u + v + w + x + y = 2, $Al(C_{1-6}\ alkyl)_u(C_{6-10}\ aryl)_v$(5- to 10-membered heteroaryl)$_w$$(C_{5-10}\ cycloalkyl)_x$(5- to 10-membered heterocyclyl)$_y$, wherein u + v + w + x + y = 2, $Ga(C_{1-6}\ alkyl)_u(C_{6-10}\ aryl)_v$(5- to 10-membered heteroaryl)$_w$$(C_{5-10}\ cycloalkyl)_x$(5- to 10-membered heterocyclyl)$_y$, wherein u + v + w + x + y = 2, or H. $C_{1-6}$ alkyl can be optionally substituted by halogen, $OR^2$, $COR^2$, $COOR^2$, $CONR^2{}_2$ or $NR^2{}_2$ and the alkyl carbon chain can be optionally interrupted by one or more -O-. $C_{6-10}$ aryl, 5- to 10-membered heteroaryl, $C_{5-10}$ cycloalkyl and 5- to 10-membered heterocyclyl can be optionally substituted by halogen, $C_{1-6}$ alkyl, $C_{6-10}$ aryl, $C_{5-10}$ cycloalkyl, $OR^2$, $COR^2$, $COOR^2$, $CONR^2{}_2$ or $NR^2{}_2$. $R^2$ is as defined above.

X is a halogen (e.g., F, Cl, Br, or I), a pseudohalogen (e.g., CN, OCN, SCN or $N_3$) or an oxygen-based leaving group (e.g., triflate, sulphate, tosylate, or mesylate). Preferably X is Cl.

In an alternative embodiment, the phosphorus-containing compound represented by the formula $(R_3M)_nPH_{3-n}$ is further reacted with formaldehyde and HCl to provide $[P(CH_2OH)_4]Cl$, wherein R, M and n are as defined above.

In a further alternative, the phosphorus-containing compound represented by the formula $(R_3M)_nPH_{3-n}$ is further reacted with formaldehyde and $H_2SO_4$ to provide $[P(CH_2OH)_4]_2SO_4$, wherein R, M and n are as defined above.

In an alternative embodiment, the phosphorus-containing compound represented by the formula $(R_3M)_nPH_{3-n}$ is further reacted with R"C(O)X to provide $(R"C(O))_nPH_{3-n}$;
wherein

R, M and n are as defined above;

R" is an organic moiety. The type of moiety is not particularly limited and a wide variety of different compounds can be used. Examples of possible moieties include $C_{1-6}$ alkyl, $C_{6-10}$ aryl, $C_{1-6}$ alkylene-$C_{6-10}$ aryl, $C_{6-10}$ arylene-$C_{1-6}$ alkyl, 5- to 10-membered heteroaryl, $C_{1-6}$ alkylene-(5- to 10 membered heteroaryl), 5- to 10 membered heteroarylene-$C_{1-6}$ alkyl, $C_{5-10}$ cycloalkyl, $C_{1-6}$ alkylene-$C_{5-10}$ cycloalkyl, $C_{5-10}$ cycloalkyl-$C_{1-6}$ alkyl, 5- to 10 membered heterocyclyl, $C_{1-6}$ alkylene-5- to 10 membered heterocyclyl, 5- to 10 membered heterocyclyl-$C_{1-6}$ alkyl or H. $C_{1-6}$ alkyl can be optionally substituted by halogen, $OR^2$, $COR^2$, $COOR^2$, $CONR^2_2$ or $NR^2_2$ and the alkyl carbon chain can be optionally interrupted by one or more -O-. $C_{6-10}$ aryl, 5- to 10-membered heteroaryl, $C_{5-10}$ cycloalkyl and 5- to 10-membered heterocyclyl can be optionally substituted by halogen, $C_{1-6}$ alkyl, $C_{6-10}$ aryl, $C_{5-10}$ cycloalkyl, $OR^2$, $COR^2$, $COOR^2$, $CONR^2_2$ or $NR^2_2$; and

X is a halogen (e.g., F, Cl, Br, or I), a pseudohalogen (e.g., CN, OCN, SCN or $N_3$) or an oxygen-based leaving group (e.g. triflate, sulphate, tosylate, mesylate). Preferably X is Cl.

In another alternative embodiment, the phosphorus-containing compound represented by the formula $(R_3M)_nPH_{3-n}$ is further reacted with formaldehyde to provide $P(CH_2OH)_3$, wherein R, M and n are as defined above. If desired, $P(CH_2OH)_3$ can be further reacted with $H_2O_2$ or $O_2$ to $P(O)(CH_2OH)_3$. It is also possible, to further react $P(CH_2OH)_3$ with HX and formaldehyde to $X^{-}\,{}^{+}P(CH_2OH)_4$; wherein X is halogen or ½ sulfate.

The phosphorus-containing compound represented by the formula $(R_3M)_nPH_{3-n}$ can also be reacted with $R'''_2C=X$ , where R, M and n are defined as above and X is selected from O, NR'", $CR'''_2$;
R‴ is an electrophilic moiety. The type of moiety is not particularly limited and a wide variety of different compounds can be used. Examples of possible moieties include $C_{1-6}$ alkyl, $C_{6-10}$ aryl, $C_{1-6}$ alkylene-$C_{6-10}$ aryl, $C_{6-10}$ arylene-$C_{1-6}$ alkyl, 5- to 10-membered heteroaryl, $C_{1-6}$ alkylene-(5- to 10 membered heteroaryl), 5- to 10 membered heteroarylene-$C_{1-6}$ alkyl, $C_{5-10}$ cycloalkyl, $C_{1-6}$ alkylene-$C_{5-10}$ cycloalkyl, $C_{5-10}$ cycloalkyl-$C_{1-6}$ alkyl, 5- to 10 membered heterocyclyl, $C_{1-6}$ alkylene-5- to 10 membered heterocyclyl, 5- to 10 membered heterocyclyl-$C_{1-6}$ alkyl or H. $C_{1-6}$ alkyl can be optionally substituted by halogen, $OR^2$, $COR^2$, $COOR^2$, $CONR^2_2$ or $NR^2_2$ and the alkyl carbon chain can be optionally interrupted by one or more -O-. $C_{6-10}$ aryl, 5- to 10-membered heteroaryl, $C_{5-10}$ cycloalkyl and 5- to 10-membered heterocyclyl can be optionally substituted by halogen, $C_{1-6}$ alkyl, $C_{6-10}$ aryl, $C_{5-10}$ cycloalkyl, $OR^2$, $COR^2$, $COOR^2$, $CONR^2_2$ or $NR^2_2$.

In another alternative embodiment, the phosphorus-containing compound represented by the formula $(R_3M)_nPH_{3-n}$ can be reacted with Ar*X. Ar* is selected from $C_{6-10}$ aryl and 5- to 10 membered heteroaryl which can be optionally substituted with halogen, $C_{1-6}$ alkyl, $C_{6-10}$ aryl, $C_{5-10}$ cycloalkyl, $OR^2$, $COR^2$, $COOR^2$, $CONR^2_2$ or $NR^2_2$. X is a halogen or $NO_2$.

In yet another alternative, the phosphorus-containing compound represented by the formula $(R_3M)_nPH_{3-n}$ can be reacted with $R^{**}_2O_2$ with R** being $C_{1-6}$ alkyl, $C_{6-10}$ aryl or H to provide $H_2P(O)OR^{***}$,
wherein

R, M and n are as defined above; and

R*** is H, $MR_3$ or R**.

Another option is to react the phosphorus-containing compound represented by the formula $(R_3M)_nPH_{3-n}$ with an acid to provide $PH_3$, wherein R, M and n are as defined above.

In yet another embodiment, the phosphorus-containing compound represented by the formula $(R_3M)_nPH_{3-n}$ is further reacted with a metal salt represented by the empirical formula $M^*X_a$ to provide a metal phosphide or metal polyphosphide represented by the empirical formula $M^*P_b$,
wherein

R, M and n are as defined above;

$$1 \leq a \leq 6;$$

$$0.1 \leq b \leq 10;$$

M* is a metal atom; and
X is a halogen (e.g., F, Cl, Br, or I), a pseudohalogen (e.g., CN, OCN, SCN or $N_3$), an oxygen-based leaving group (e.g., sulphate, nitrate, triflate, perchlorate, tosylate, mesylate, acetate or acetylacetonate) or a nitrogen-based leaving group (e.g. dicyclohexylamide, diphenylamide or bis(trimethyl)silylamide).

The phosphorus-containing compound represented by the formula $(R_3M)_nPH_{3-n}$ can also be further reacted with $H_2O_2$ to provide $H_2P(O)OR^{****}$,
wherein

R, M and n are as defined above; and
R**** is H or $MR_3$.

In one advantageous embodiment, the preparation of the phosphorus-containing compound represented by the formula $(R_3M)_nPH_{3-n}$ and the further reaction with the compound represented by the formula R*X, R"C(O)X, $R'''_2C$=X, Ar*X or $R^{**}{}_2O_2$ or with formaldehyde and HCl, formaldehyde and $H_2SO_4$, formaldehyde, acid, or $H_2O_2$ can be conducted in a one-pot reaction.
The conditions of the above mentioned further reactions of the phosphorus-containing compound represented by the formula $(R_3M)_nPH_{3-n}$ can be determined by a person skilled in the art.
Examples of possible reactions are given in the following. This section is not intended to be an exhaustive list, and many other applications will be feasible.

*Phosphines and phosphonium salts*

Phosphines and phosphonium salts are used as biocides, surfactants, phase-transfer catalysts and as reagents for organic chemistry (for example, in the classic Wittig reaction).
An especially notable example is the phosphonium salt tetrakis(hydroxymethyl)phosphonium chloride ($[P(CH_2OH)_4]Cl$, THPC; Scheme 4, top) which is an important industrial precursor, for example, for flame-retardant materials as well as being used as a water treatment agent. THPC can be accessed directly from elemental phosphorus using the method of the present invention and subsequent reaction of the phosphorus-containing compound represented by the formula $(R_3M)_nPH_{3-n}$ with formaldehyde and HCl. Current industrial routes to THPC use $PH_3$ as a starting material (in turn prepared from $P_4$ by acid- or base-catalyzed disproportionation). $PH_3$ is a highly toxic gas under standard conditions and is used commercially as a fumigant. It forms potentially explosive mixtures with air. Thus, the method of the present invention constitutes a significantly improved synthetic route which is simple and safe. The method of the present invention can also be used to prepare the corresponding sulfate salt of THPC by using sulfuric acid instead of hydrochloric acid.
THPC can be prepared from an individual isolated $(R_3M)_nPH_{3-n}$ (n = 1, 2 or 3), but is preferably prepared directly from the crude mixture of $(R_3M)_nPH_{3-n}$ as described above.
The molar ratio of total phosphorus atoms (e.g. four times the initial amount of $P_4$ when $P_4$ is used as starting material) to formaldehyde is not particularly limited. Typically, it will be about 1:4 to about 1:20, more preferably about 1:4 to about 2:25.
Formaldehyde may be used in the form of an aqueous formaldehyde solution, 1,3,5-trioxane or paraformaldehyde, more preferably in the form of paraformaldehyde or 1,3,5-trioxane, and most preferably in the form of paraformaldehyde.
The molar ratio of total phosphorus atoms (e.g. four times the initial amount of $P_4$ when $P_4$ is used as starting material) to HCl is not particularly limited. Typically, it will be about 1:1 to about 1:20, more preferably about 1:1 to about 1:10.
The reaction is typically performed in an organic solvent. The type of solvent is not particularly limited and both protic or aprotic solvents can be employed. Possible solvents include aliphatic organic solvents (such as $C_{5-8}$ alkanes), aromatic organic solvents (such as benzene and toluene), ethers (such as diethyl ether and tetrahydrofuran), and alcohols (such as $C_{1-4}$ alcohols like ethanol, propanol, butanol). Preferred solvents are alcohols, and the most preferred solvent is ethanol.
The concentration of total phosphorus atoms (e.g. four times the initial amount of $P_4$ when $P_4$ is used as starting material) in the solvent is typically in the range of about 0.04 mmol per mL to about 0.4 mmol per mL, preferably of about 0.06 mmol per mL to about 0.16 mmol per mL.
The temperature at which the reaction is performed can vary, e.g., depending on the solvent which is used. It can be conducted, for instance, at a temperature in the range of about 5 °C to about 50 °C, preferably about 10 to about 40 °C, more preferably at about 10 °C to about 30 °C, even more preferably at about 20 °C to about 30 °C.
The duration of the reaction is often in the range of about 10 minutes to about 72 hours, more typically 1 hour

to 72 hours.

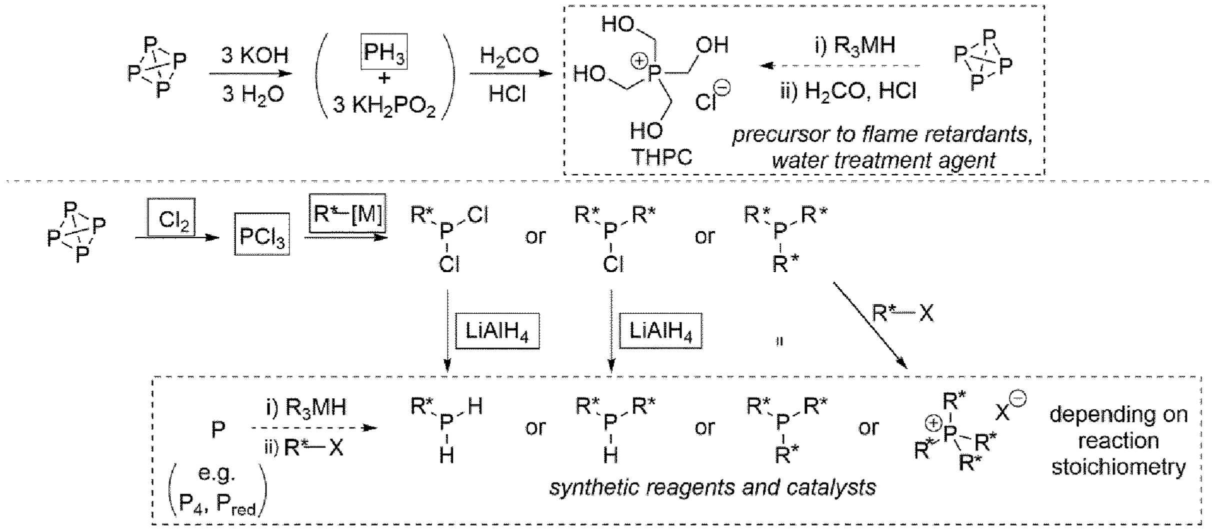


**Scheme 4:** Comparison of prior art methods and the method of the present invention for preparing organophosphines and phosphonium salts. Corrosive and/or pyrophoric reagents are highlighted by solid boxes.

Phosphines and phosphonium salts can be prepared by reacting the phosphorus-containing compound represented by the formula $(R_3M)_nPH_{3-n}$ and the compound represented by the formula R*X. In the following, certain reaction conditions are mentioned. However, these are not to be construed as limiting because they strongly depend on the type of compound R*X employed.

$[P(CH_2Ph)_4]Br$ can be prepared from $(R_3M)_nPH_{3-n}$ and $PhCH_2Br$ in the presence of potassium bis(trimethylsilyl)amide (KHMDS). An individual isolated $(R_3M)_nPH_{3-n}$ (n = 1, 2 or 3) can be used, but $[P(CH_2Ph)_4]Br$ is preferably prepared directly from the crude mixture of $(R_3M)_nPH_{3-n}$ as described above.

The molar ratio of total phosphorus atoms (e.g. four times the initial amount of $P_4$ when $P_4$ is used as starting material) to $PhCH_2Br$ is not particularly limited. Typically, it will be about 1:4 to about 1:20, more preferably about 1:4 to about 1:10.

The molar ratio of total phosphorus atoms (e.g. four times the initial amount of $P_4$ when $P_4$ is used as starting material) to potassium bis(trimethylsilyl)amide (KHMDS) is not particularly limited. Typically, it will be about 0 (i.e. no KHMDS used) to about 1:10, more preferably about 0 to about 1:2, and most preferably about 0 to about 2:3.

The reaction is typically performed in an organic solvent. The type of solvent is not particularly limited and both protic or aprotic solvents can be employed. Possible solvents include aliphatic organic solvents (such as $C_{5-8}$ alkanes), aromatic organic solvents (such as benzene and toluene), ethers (such as diethyl ether and tetrahydrofuran), and alcohols (such as $C_{1-4}$ alcohols like ethanol, propanol, butanol). Preferred solvents are aromatic hydrocarbons, and the most preferred solvent is toluene.

The concentration of total phosphorus atoms (e.g. four times the initial amount of $P_4$ when $P_4$ is used as starting material) in the solvent is typically in the range of about 0.04 mmol per mL to about 0.4 mmol per mL, preferably of about 0.06 mmol per mL to about 0.08 mmol per mL.

The temperature at which the reaction is performed is typically in the range of about 5 °C to about 110 °C, preferably about 40 to about 90 °C, more preferably at about 60 °C.

The duration of the reaction is often in the range of about 1 hour to about 120 hours, more typically 48 hours to 72 hours.

By varying the molar ratio of the phosphorus-containing compound represented by the formula $(R_3M)_nPH_{3-n}$ and the compound represented by the formula R*X the reaction can be controlled to provide primary organophosphines $R^*PH_2$, secondary organophosphines $R^*_2PH$, tertiary organophosphines $R^*_3P$ or quaternary organophosphonium salts $P(R^*)_4^+$ $X^-$ (Scheme 4, bottom; wherein R* can be the same or different).

At present, these compounds are typically produced by treatment of $PCl_3$ with a pyrophoric organometallic nucleophile, generated by reaction of the corresponding organohalide with a strong group 1 or 2 metal reductant. For

primary and secondary phosphines the intermediate chlorophosphine must then be reduced with $LiAlH_4$. Phosphonium salts are prepared by reaction of the phosphine with a further equivalent of the organohalide in the prior art.

Organophosphines find various uses as catalysts and reagents in organic chemistry, and particularly as ligands for transition metal catalysis. They can also be used as precursors for more oxidized phosphorus-containing compounds (for example, oxidation of primary phosphines can yield phosphonates, examples of which find use as pesticides and antivirals).

It is also possible to directly prepare the phosphine $P(CH_2OH)_3$. This phosphine is a valuable industrial intermediate, which is usually prepared indirectly *via* monodealkylation of the THPC salt. This compound can be prepared by reacting the phosphorus-containing compound represented by the formula $(R_3M)_nPH_{3-n}$ with formaldehyde.

Tris(hydroxymethyl)phosphine (THP) can be prepared from $(R_3M)_nPH_{3-n}$ (n = 1, 2 or 3), but is preferably prepared directly from the crude mixture of $(R_3M)_nPH_{3-n}$ as described above.

The molar ratio of total phosphorus atoms (e.g. four times the initial amount of $P_4$ when $P_4$ is used as starting material) to formaldehyde is not particularly limited. Typically, it will be about 1:3 to about 1:20, more preferably about 1:3 to about 1:10, and most preferably about 1;3.

Formaldehyde may be used in the form of paraformaldehyde, 1,3,5-trioxane, or an aqueous formaldehyde solution, more preferably in the form of paraformaldehyde or 1,3,5-trioxane, and most preferably in the form of paraformaldehyde.

The reaction is typically performed in a protic organic solvent. Possible solvents include alcohols (such as $C_{1-4}$ alcohols like ethanol, propanol, butanol). The most preferred solvent is ethanol.

The concentration of total phosphorus atoms (e.g. four times the initial amount of $P_4$ when $P_4$ is used as starting material) in the solvent is typically in the range of about 0.04 mmol per mL to about 0.4 mmol per mL, preferably of about 0.06 mmol per mL to about 0.08 mmol per mL.

The temperature at which the reaction is performed can vary, e.g., depending on the solvent which is used. It can be conducted, for instance, at a temperature in the range of about 5 °C to about 50 °C, preferably about 10 °C to about 40 °C, more preferably at about 10 °C to about 30 °C, even more preferably at about 20 °C to about 30 °C.

The duration of the reaction is often in the range of about 10 minutes to about 72 hours, more typically 12 hours to 24 hours.

The phosphine $P(CH_2OH)_3$ can be subsequently reacted further as desired, e.g., by reaction with $H_2O_2$ or $O_2$ to $P(O)(CH_2OH)_3$ or with HX and formaldehyde to $X^- \, ^+P(CH_2OH)_4$ (X = halogen, ½ sulfate).

*Acyl phosphines*

The method of the present invention can also be used to furnish acyl-substituted phosphines. Such compounds are known precursors to mono- and bis-acyl phosphine oxides (MAPOs and BAPOs), which are used industrially as photoinitiators for polymerization reactions. Standard methods for MAPO/BAPO preparation involve deprotonation of primary phosphines $R''PH_2$, reaction with an acyl chloride, and subsequent oxidation (Scheme 5).

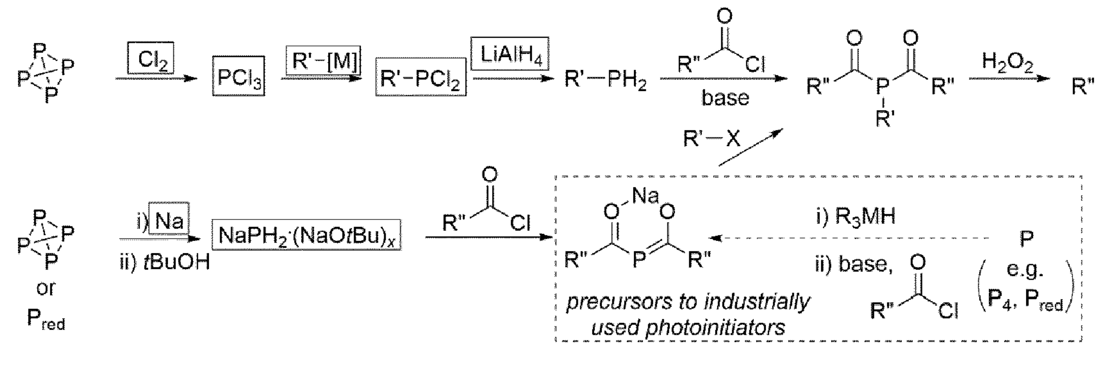


**Scheme 5:** Comparison of prior art methods and the method of the present invention for preparing BAPO photoinitiators. Corrosive and/or pyrophoric reagents are highlighted by solid boxes, and the method of the current invention is highlighted by a dashed box.

The primary phosphines themselves must be prepared *via* reaction of $PCl_3$ with an organometallic reagent (to give $R'PCl_2$) and subsequent reduction. Alternatively, in the prior art MAPOs/BAPOs are accessible starting from metal

phosphides (see Scheme 6) through reaction with an acyl chloride and subsequent oxidation.

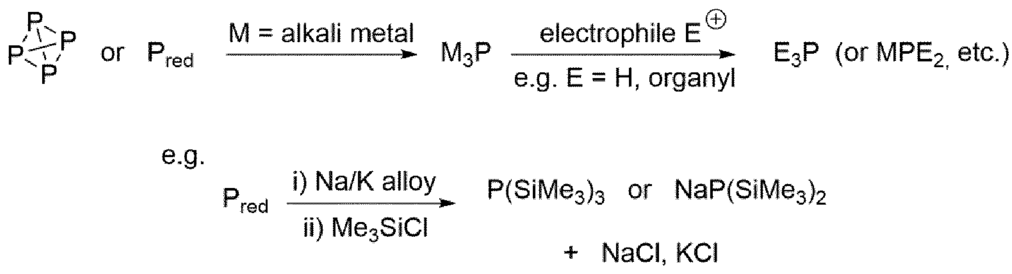


**Scheme 6:** Prior art methods for preparing alkali metal phosphides.

In the present invention, the phosphorus-containing compound represented by the formula $(R_3M)_nPH_{3-n}$ is reacted with acyl halide R"-C(O)-X to provide an acyl phosphine having the formula R"-C(O)-$PH_2$ or R"-C(O)-PH-$MR_3$ which can be subsequently reacted with additional acyl halide to provide R"-C(O)-P=C($O^-$)-R" where R" are independent organic moieties, as already defined above. The reaction is illustrated in Scheme 7.

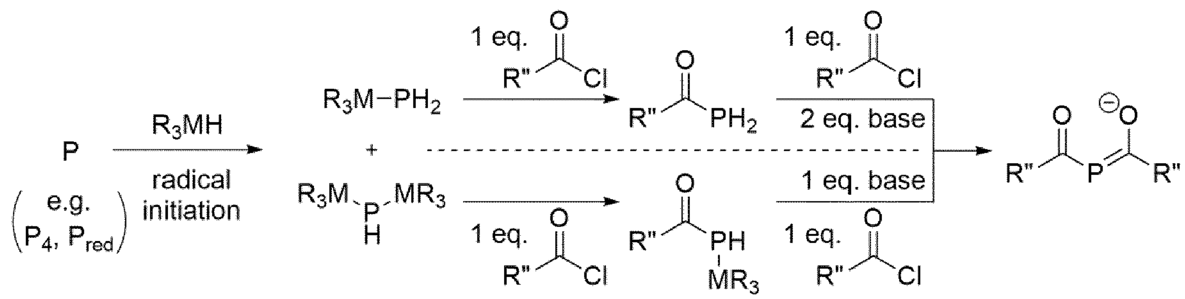


**Scheme 7:** The method of the present invention for preparing BAPO precursors.

Due to its relative mildness, a wide range of functional groups are expected to be compatible with the method of the invention, which would allow for the synthesis of a wider range of MAPO/BAPO precursors than with many other methods. In particular, the method of the invention would allow for the relatively simple preparation of 'mixed' BAPOs containing two different R" groups, which are otherwise often difficult to prepare. This is significant as iterative modification of MAPO and BAPO photoinitiators allows for the steady, iterative improvement of properties such as solubility and crystallinity.

AdC(O)$PH_2$ can be prepared by reaction of $(R_3M)PH_2$ with AdC(O)Cl.

The molar ratio of $(R_3M)PH_2$ to AdC(O)Cl is not particularly limited. Typically, it will be about 2:1 to about 1:2, more preferably about 1:1.

The reaction is typically performed in an organic solvent. The type of solvent is not particularly limited and both protic or aprotic solvents can be employed. Possible solvents include aliphatic organic solvents (such as $C_{5-8}$ alkanes), aromatic organic solvents (such as benzene and toluene), ethers (such as diethyl ether and tetrahydrofuran), and alcohols (such as $C_1$-$_4$ alcohols like ethanol, propanol, butanol). Preferred solvents are aromatic hydrocarbons, and the most preferred solvents are toluene and benzene.

The concentration of $(R_3M)PH_2$ in the solvent is typically in the range of about 0.04 mmol per mL to about 0.4 mmol per mL, preferably of about 0.1 mmol per mL to about 0.15 mmol per mL.

The temperature at which the reaction is performed is typically in the range of about 5 °C to about 40 °C, preferably about 20 to about 25 °C.

The duration of the reaction is often in the range of about 1 minute to about 24 hours, more typically about 1 hour.

*Other applications*

Given the wide variety of compounds with which the phosphorus-containing compound represented by the

formula $(R_3M)_nPH_{3-n}$ can be reacted, the range of products that can be accessed by the present invention is very broad. While the examples listed above have primarily focused on the use of organic electrophiles, inorganic electrophiles could also yield useful products.

For example, reaction with an acid allows the phosphorus-containing compound represented by the formula $(R_3M)_nPH_{3-n}$ to act as a convenient source of $PH_3$, which is widely used as a fumigant as well as being an intermediate in the synthesis of phosphorus-containing compounds (e.g. THPC, above).

$PH_3$ can be provided by reacting the phosphorus-containing compound represented by the formula $(R_3M)_nPH_{3-n}$ with an acid such as HCl, HBr, HI, $H_2SO_4$, $HNO_3$ or $H_3PO_4$. The molar ratio of the phosphorus-containing compound represented by the formula $(R_3M)_nPH_{3-n}$ to acid is about 1:1 to about 1:20, preferably about 1:1 to about 1:10.

The reaction is typically performed in an organic solvent. The type of solvent is not particularly limited and both protic and aprotic solvents can be employed. Possible solvents include aliphatic organic solvents (such as $C_{5-8}$ alkanes), aromatic organic solvents (such as benzene and toluene), ethers (such as diethyl ether and tetrahydrofuran), and alcohols (such as $C_{1-4}$ alcohols like ethanol, propanol, butanol). Preferred solvents are aromatic hydrocarbons, and the most preferred solvent is toluene.

The concentration of total phosphorus atoms (e.g. four times the initial amount of $P_4$ when $P_4$ is used as starting material) in the solvent is typically in the range of about 40 mM to about 400 mM, preferably of about 80 mM to about 120 mM.

The duration of the reaction is often in the range of about 10 minutes to about 24 hours, more typically 10 minutes to 1 hour.

Treatment with a metal compound (such as a metal halide, a metal oxide, a metal alkoxide, a metal hydroxide, a metal amide, or an organometallic compound) can provide mild access to metal phosphide or metal polyphosphides in a similar manner.

Due to the similar reactivity, the phosphorus-containing compound represented by the formula $(R_3M)_nPH_{3-n}$ could be used to replace $PH_3$ - which presents a very serious safety hazard due to both its high toxicity and spontaneous flammability - in many applications. For example, THPC (*vide supra*) is currently prepared from $PH_3$. Nevertheless, the toxicity of $PH_3$ also has a positive application, as it is very widely employed as a fumigant and pesticide. In practice, $PH_3$ gas is rarely used directly, and is instead released at the point of use by controlled hydrolysis of metal phosphide pellets (e.g. AlP "Phostoxin", $Mg_2P_3$ "Magtoxin"). The phosphorus-containing compound represented by the formula $(R_3M)_nPH_{3-n}$ can be used very similarly as a convenient source of $PH_3$, for similar applications, with the $R_3MX$ or $R_3MOMR_3$ by-product being readily recycled (*vide infra*). In the same manner, these phosphines could be used as useful precursors in other contexts where high-purity $PH_3$ is required, such as in the semiconductor industry.

The method of the present invention presents several significant advantages over state-of-the-art oxidative and reductive methods for the transformation of elemental phosphorus into value-added phosphorus-containing products. Perhaps the greatest of these is the avoidance of the most hazardous reagents and intermediates; while some $R_3MH$ compounds do present some concerns related to toxicity, they are generally far less hazardous and far easier to handle than the reagents currently used in industry ($Cl_2$ gas, Na metal, etc.). As well as the inherent practical and safety advantages of avoiding these species, the use of only mild reagents also expands the scope of accessible products, allowing the direct synthesis of compounds containing sensitive functional groups that would be unstable in the presence of harsher reagents. The directness of the method (with target products typically accessible in a 'one pot' fashion directly from elemental phosphorus) also offers advantages in terms of overall efficiency and space-time yield, as there is no need for laborious isolation and purification of intermediate compounds. Furthermore, since the by-products represented by the formula $R_3MX$ can be efficiently recycled, the method offers very high atom-efficiency, producing very little stoichiometric waste.

**Regeneration** of the compound represented by the formula $R_3MX$

Compounds represented by the formula $(R_3M)_nPH_{3-n}$ such as $R_3SnH$ (R = Bu, Ph), $(Me_3Si)_3SiH$ and $Ph_3GeH$ are commonly available and inexpensive reagents, so that the method of the present invention provides a low cost method for synthesizing a variety of phosphorus-containing compounds.

The costs can be further reduced by recycling the compound represented by the formula $R_3MX$ which is formed as a by-product when the phosphorus-containing compound represented by the formula $(R_3M)_nPH_{3-n}$ is further reacted with a compound represented by the formula R*X, R"C(O)X, $R'''_2C=X$, Ar*X or $R^{**}_2O_2$ or with formaldehyde and HCl, formaldehyde and $H_2SO_4$, formaldehyde, acid, or $H_2O_2$.

The compound represented by the formula $R_3MX$ can be recycled to provide the compound represented by the formula $R_3MH$. Any known route can be employed. One of the commonly used synthetic routes is the reaction with polymethylhydrosiloxane which is illustrated in Scheme 8.

$R_3MH$ can be prepared from $R_3MX$ (X = alkoxide, hydroxide, ½O) by reaction with polymethylhydrosiloxane (PMHS).

The molar ratio of $R_3MX$ to PMHS is not particularly limited. Typically, it will be about 1:1 to about 1:50.

The reaction is typically performed in an organic solvent. The type of solvent is not particularly limited and both protic or aprotic solvents can be employed. Possible solvents include aliphatic organic solvents (such as $C_{5-8}$ alkanes), aromatic organic solvents (such as benzene and toluene), ethers (such as diethyl ether and tetrahydrofuran), and alcohols (such as $C_{1-4}$ alcohols like ethanol, propanol, butanol). Preferred solvents are aromatic hydrocarbons, and the most preferred solvent is toluene.

The concentration of the compound represented by the formula $R_3MH$ in the solvent is typically in the range of about 0.01 mmol per mL to about 0.6 mmol per mL, preferably of about 0.01 mmol per mL to about 0.16 mmol per mL.

The temperature at which the reaction is performed can vary, e.g., depending on the solvent which is used. It can be conducted, for instance, at a temperature in the range of about 5 °C to about 50 °C, preferably about 10 to about 40 °C, more preferably at about 10 °C to about 30 °C, even more preferably at about 20 °C to about 30 °C.

The duration of the reaction is often in the range of about 1 hour to about 48 hours, more typically 12 hours to 24 hours.

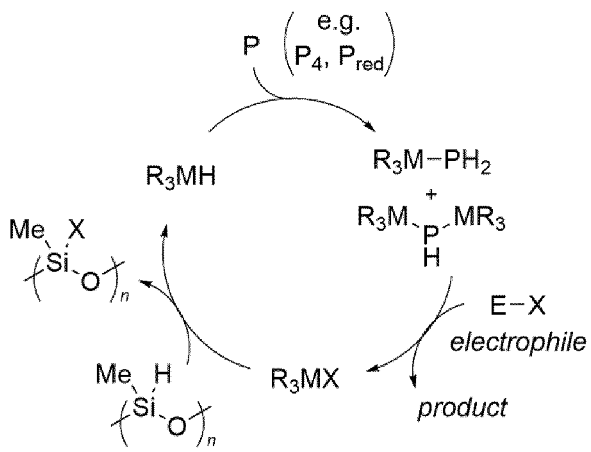


**Scheme 8:** The method of the present invention including an example of the optional recycling step.

## Examples

The present invention is illustrated by the following examples which should not be construed limiting. Unless indicated otherwise, all reactions and manipulations were performed under a dry, inert atmosphere using standard glovebox and Schlenk line techniques and dry, degassed solvents and reagents.

### Example 1: Synthesis of $H_2PSnBu_3$ and $HP(SnBu_3)_2$

To a 50 mL flat-bottomed Schlenk tube were added $P_4$ (61.5 mg, 0.5 mmol), PhMe (25 mL) and $Bu_3SnH$ (801 μL, 3.0 mmol). The resulting homogeneous, colorless solution was stirred under irradiation with blue LED light (7X Osram OSLON SSL80, 455 nm (±15 nm), 20.3 V 1000mA) for 18 h, during which time the Schlenk tube was placed in a block cooled by circulating water to maintain near-ambient temperature. Following removal of PhMe under vacuum, the major reaction products were separated by distillation under vacuum (ca. 105 °C, $10^{-2}$ mbar). $H_2PSnBu_3$ was collected as the volatile fraction (200 mg, 31%) as a colorless oil. $HP(SnBu_3)_2$ remained as the non-volatile fraction (555 mg, 43%), which was also collected as a colorless oil. The $HP(SnBu_3)_2$ isolated in this manner was found to be ca. 90% pure (as assessed by $^{31}P\{^1H\}$ NMR spectroscopy), containing minor amounts of $P(SnBu_3)_3$.

$H_2PSnBu_3$: $\delta(^{31}P\{^1H\})$ $(C_6D_6)$ = -288.4 ppm (s); $\delta(^{31}P)$ $(C_6D_6)$ = -288.4 ppm (t, $^1J(^{31}P-^1H)$ = 171 Hz); $\delta(^{119}Sn\{^1H\})$ $(C_6D_6)$ = 18.2 ppm (d, $^1J(^{31}P-^{119}Sn)$ = 522 Hz).

$HP(SnBu_3)_2$: $\delta(^{31}P\{^1H\})$ $(C_6D_6)$ = -324.8 ppm (s); $\delta(^{31}P)$ $(C_6D_6)$ = -324.8 ppm (d, $^1J(^{31}P-^1H)$ = 157 Hz); $\delta(^{119}Sn\{^1H\})$ $(C_6D_6)$ = 31.7 ppm (d, $^1J(^{31}P-^{119}Sn)$ = 731 Hz).

$P(SnBu_3)_3$: $\delta(^{31}P\{^1H\})$ $(C_6D_6)$ = -346.5 ppm (s); $\delta(^{31}P)$ $(C_6D_6)$ = -346.5 ppm (s); $\delta(^{119}Sn\{^1H\})$ $(C_6D_6)$ = 37.6 ppm (d, $^1J(^{31}P-^{119}Sn)$ = 912 Hz).

To a 10 mL, flat-bottomed, stoppered tube were added PhMe (500 μL), $P_4$ (0.01 mmol, as a stock solution in

77.4 μL PhH) $Bu_3SnH$ (0.063 mmol, 16.9 μL) and AIBN (0.001 mmol, as a stock solution in 49.3 μL PhH). The tube was immediately and thoroughly wrapped in Al foil to exclude any ambient light, and the stirred reaction mixture was then heated to 30 °C for 14 h. The resulting solution was analysed by $^{31}P\{^1H\}$ NMR spectroscopy (taking care to minimise any exposure to light in the process), which showed almost complete consumption of $P_4$ (ca. 5% remaining) and exclusive formation of the products $(Bu_3Sn)_nPH_{3-n}$ (primarily n = 1 and 2).

To a 10 mL, flat-bottomed, stoppered tube were added ACN (1.2 mg, 0.005 mmol), PhMe (500 μL), $P_4$ (0.01 mmol, as a stock solution in 86.0 μL of PhH) and $Bu_3SnH$ (0.1 mmol, 26.9 μL). The tube was immediately and thoroughly wrapped in Al foil to exclude any ambient light, and the stirred reaction mixture was then heated to 60 °C for 16 h. The resulting solution was analysed by $^{31}P\{^1H\}$ NMR spectroscopy (taking care to minimise any exposure to light in the process), which showed full consumption of $P_4$ and exclusive formation of the products $(Bu_3Sn)_nPH_{3-n}$ (primarily n = 1 and 2).

To a 10 mL, flat-bottomed, stoppered tube were added TEMPO (1.6 mg, 0.01 mmol), PhMe (500 μL), $P_4$ (0.01 mmol, as a stock solution in 86.0 μL of PhH) and $Bu_3SnH$ (16.1 μL, 0.06 mmol). The tube was placed in an opaque container, and the reaction mixture was stirred at ambient temperature for 6 days. The resulting solution was analysed by $^{31}P\{^1H\}$ NMR spectroscopy (taking care to minimise any exposure to light in the process), which showed significant consumption of $P_4$ (ca. 50% remaining) and exclusive formation of the products $(Bu_3Sn)_nPH_{3-n}$ (primarily n = 2).

Example 2: Hydrostannylation of $P_{red}$

To a 10 mL flat-bottomed Schlenk tube were added $P_{red}$ (12.4 mg, 0.4 mmol), PhMe (500 μL) and $Bu_3SnH$ (16.1 μL, 0.06 mmol). The resulting red suspension was stirred under irradiation with near UV LED light (365 nm) for 10 days, during which time the Schlenk tube was placed in a block cooled by circulating water to maintain near-ambient temperature. The resulting solution was analysed by $^1H$ NMR spectroscopy (which indicated complete consumption of $Bu_3SnH$) and $^{31}P\{^1H\}$ NMR spectroscopy (which showed exclusive formation of the products $(Bu_3Sn)_nPH_{3-n}$, in amounts and ratios comparable to the analogous reaction using $P_4$ that is described in Example 1).

**Example 3: Synthesis of $PH_3$**

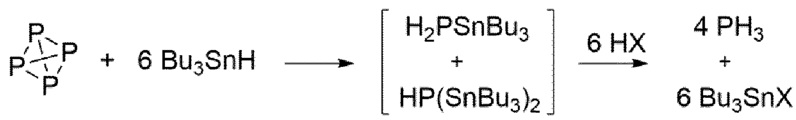


Phosphine $PH_3$ can be formed selectively (as judged by $^{31}P\{^1H\}$ NMR spectroscopy) by simple acidification of the phosphorus-containing compound represented by the formula $(R_3Sn)_nPH_{3-n}$.

To an NMR tube fitted with a J. Young valve were added PhMe (0.5 mL), $P_4$ (0.01 mmol, as a stock solution in 74.0 μL of PhH), and $Bu_3SnH$ (0.06 mmol, 16.1 μL). $Ph_3PO$ (precisely 14.2 mg) was also added, to act as an invariant internal standard for subsequent quantitative $^{31}P\{^1H\}$ NMR spectroscopy. The sealed tube was placed under blue LED irradiation (455 nm (±15 nm), 3.2 V, 700 mA, Osram OSLON SSL 80)) for 17 h, during which time a circulating water block was used to maintain near-ambient temperature. The resulting solution was frozen using liquid nitrogen and HCl (0.4 mmol, 4.0 M in 1,4-dioxane) was added via a syringe. After thawing, $^{31}P$ NMR spectroscopic analysis of the resulting solution showed only a single resonance corresponding to $PH_3$ (aside from the expected signal for the $Ph_3PO$ internal standard at 34.4 ppm). Quantitative integration confirmed a minimum of 56% conversion to $PH_3$ (this value does not include additional gaseous $PH_3$ present in the headspace of the NMR tube).

$\delta(^{31}P\{^1H\})$ = -241.9 ppm (s); $\delta(^{31}P)$ = -241.8 ppm (quartet, $^1J(^{31}P-^1H)$ = 187 Hz).

**Example 4: Synthesis of $H_2P(O)OR$**

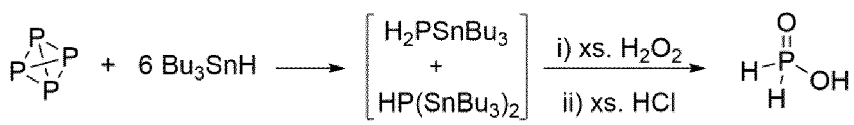


Oxidation of the phosphorus-containing compound represented by the formula $(R_3Sn)_nPH_{3-n}$ with $H_2O_2$ at room

temperature rapidly and cleanly yields a hypophosphite derivative $H_2P(O)OR$.

Further oxidation of $H_2P(O)OR$ by $H_2O_2$ can be achieved using increased temperatures and/or reaction times, yielding the phosphite species $HP(O)(OR)_2$, presumably by oxidation of one P-H bond. This reaction proceeds cleanly.

To a 50 mL flat-bottomed Schlenk were added $P_4$ (62.0 mg, 0.5 mmol), PhMe (25 mL) and $Bu_3SnH$ (847 μL, 3.15 mmol). The resulting homogeneous, colourless solution was stirred under irradiation with blue LED light (7X Osram OSLON SSL80, 455 nm (±15 nm), 20.3 V 1000mA) for 22 h, during which time the Schlenk tube was placed in a block cooled by circulating water to maintain near-ambient temperature. The resulting colourless solution was frozen in a liquid nitrogen bath and $H_2O_2$ (5.0 mmol, 0.43 mL, 35% aq.) was added. The mixture was thawed and allowed to warm to room temperature with stirring over the course of 30 minutes. Volatiles were removed under vacuum and hexane (20 mL) and MeCN (20 mL) were added. HCl was added to the stirred biphasic mixture (10 mmol, 2.5 mL, 4.0 M in 1,4-dioxane) and after stirring for 1 h the MeCN layer was separated and volatiles were removed under vacuum. The resulting colourless oil was washed with hexane (20 mL) and dried thoroughly under vacuum to give $H_2P(O)OH$ (127 mg, 96%). The material obtained in this manner typically contains ca. 10% $HP(O)(OH)_2$ (as judged by $^{31}P\{^1H\}$ NMR spectroscopy), which is a known oxidation product of $H_2P(O)OH$.

$H_2P(O)OH$: $\delta(^{31}P\{^1H\})$ ($CD_3CN$) = 13.9 ppm (s); $\delta(^{31}P)$ ($CD_3CN$) = 13.9 ppm (t, $^1J(^{31}P\text{-}^1H)$ = 575 Hz); $\delta(^1H)$ ($CD_3CN$) = 7.05 ppm (d, $^1J(^{31}P\text{-}^1H)$ = 575 Hz), 11.1 ppm (s).

$HP(O)(OH)_2$: $\delta(^{31}P\{^1H\})$ ($CD_3CN$) = 6.5 ppm (s); $\delta(^{31}P)$ ($CD_3CN$) = 6.5 ppm (d, $^1J(^{31}P\text{-}^1H)$ = 690 Hz); $\delta(^1H)$ ($CD_3CN$) = 6.81 ppm (d, $^1J(^{31}P\text{-}^1H)$ = 690 Hz), 11.1 ppm (s).

Example 5: Synthesis of $[P(CH_2Ph)_4]Br$

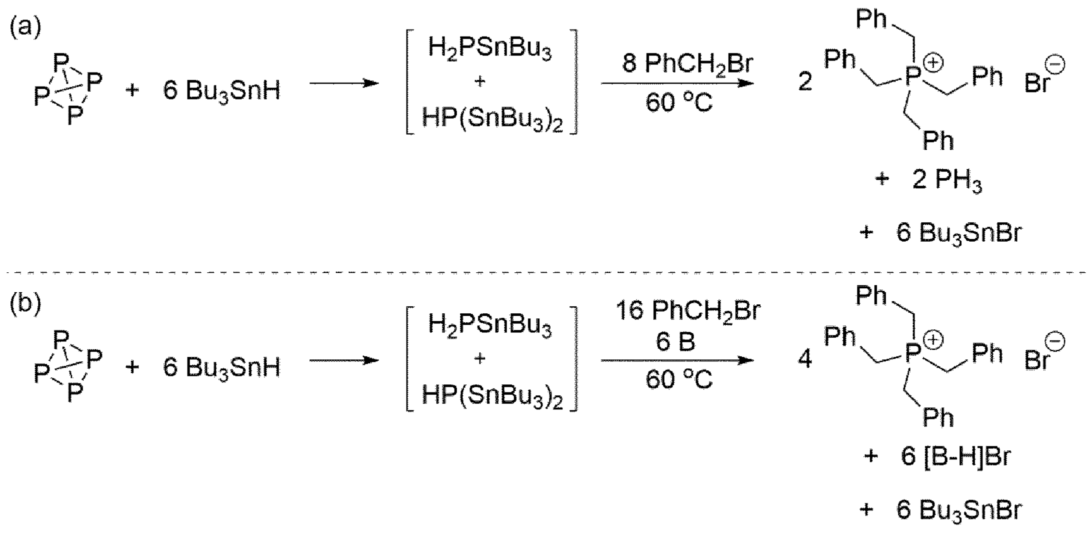


**Scheme 9:** Synthesis of $[P(CH_2Ph)_4]Br$

$[P(CH_2Ph)_4]Br$ can be prepared through reaction of the phosphorus-containing compound represented by the formula $(R_3Sn)_nPH_{3-n}$ with $PhCH_2Br$ in accordance with Scheme 8(a). The product can be easily and cleanly isolated from the reaction mixture in a yield of 80% versus theoretical maximum, incorporating 40% of total initial P atoms. More efficient incorporation of P atoms into the product can be achieved through use of an additional base (e.g. $K[N(SiMe_3)_2]$ = KHMDS), in accordance with the modified stoichiometry shown in Scheme 8(b). For this reaction the product can be isolated in a yield of 82%, incorporating 82% of total initial P atoms.

To a 50 mL flat-bottomed Schlenk were added $P_4$ (62.0 mg, 0.5 mmol), PhMe (25 mL), and $Bu_3SnH$ (847 μL, 3.15 mmol). The resulting homogeneous, colorless solution was stirred under irradiation with blue LED light (7X Osram OSLON SSL80, 455 nm (±15 nm), 20.3 V 1000mA) for 22 h, during which time the Schlenk tube was placed in a block cooled by circulating water to maintain near-ambient temperature. Benzyl bromide (2.4 mL, 20 mmol) was added and the reaction mixture heated to 60 °C with stirring for 3 days. After cooling to room temperature the pale yellow suspension was evaporated to dryness, and the resulting solid was washed with pentane (2 × 20 mL) and extracted with acetone (4 × 15 mL). Removal of volatiles under vacuum yielded the target product as a white solid (380 mg, 80%).

To a 50 mL flat-bottomed Schlenk were added $P_4$ (62.0 mg, 0.5 mmol), PhMe (25 mL), and $Bu_3SnH$ (847 μL, 3.15 mmol). The resulting homogeneous, colorless solution was stirred under irradiation with blue LED light (7X Osram OSLON SSL80, 455 nm (±15 nm), 20.3 V 1000mA) for 22 h, during which time the Schlenk tube was placed in a block cooled by circulating water to maintain near-ambient temperature. Benzyl bromide (2.4 mL, 20 mmol) and KHMDS (399 mg, 2.0 mmol) were added and the reaction mixture was heated to 60 °C with stirring for 3 days. After cooling to room temperature, the pale yellow suspension was evaporated to dryness, and the resulting solid was washed with pentane (2 × 20 mL) and extracted with acetone (4 × 15 mL). Removal of volatiles under vacuum followed by additional washing with pentane (20 mL) yielded the target product as a white solid (775 mg, 82%).

$\delta(^1H)$ ($CD_3CN$) = 7.36 ppm (m, 3H), 7.15 ppm (m, 2H), 3.73 ppm (d, $^2J(^{31}P-^1H)$ = 14.3 Hz);
$\delta(^{31}P\{^1H\})$ ($CD_3CN$) = 26.0 ppm (s); $\delta(^{31}P)$ ($CD_3CN$) = 26.0 ppm (nonet, $^2J(^{31}P-^1H)$ = 14.3 Hz).

**Example 6: Synthesis of acyl phosphines**

In a vial were combined $H_2PSnBu_3$ (16.2 mg, 0.05 mmol), $C_6D_6$ (500 μL), and tBuC(O)Cl (6.2 μL, 0.05 mmol). The resulting reaction mixture was allowed to stand in the dark for approximately one hour and then analyzed by NMR spectroscopy, which showed only one major product (identified as tBuC(O)$PH_2$), alongside minor residual $H_2PSnBu_3$, and minor by-products tBuC(O)P(H)$SnBu_3$ and $(tBuC(O))_2PH$ (each < 5%).
tBuC(O)$PH_2$: $\delta(^{31}P\{^1H\})$ ($C_6D_6$) = -122.2 ppm (s); $\delta(^{31}P)$ ($C_6D_6$) = -122.2 ppm (t, $^1J(^{31}P-^1H)$ = 216 Hz).
tBuC(O)P(H)$SnBu_3$: $\delta(^{31}P\{^1H\})$ ($C_6D_6$) = -140.4 ppm (s); $\delta(^{31}P)$ ($C_6D_6$) = -140.4 ppm (d, $^1J(^{31}P-^1H)$ = 193 Hz).
$(tBuC(O))_2PH$: $\delta(^{31}P\{^1H\})$ ($C_6D_6$) = 52.2 ppm (s, OH tautomer), -36.6 ppm (s, PH tautomer); $\delta(^{31}P)$ ($C_6D_6$) = 52.2 ppm (s, OH tautomer), -36.6 ppm (d, $^1J(^{31}P-^1H)$ = 225 Hz, PH tautomer).

**Example 7: Synthesis of THP, THPC and THPO**

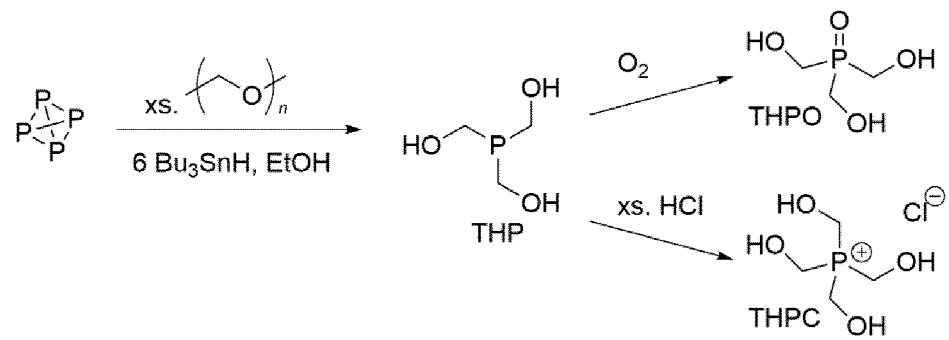

THP
THPO
THPC

Synthesis of THP:

To a 50 mL flat-bottomed Schlenk were added $P_4$ (62.0 mg, 0.5 mmol) and PhH (5.0 mL). After stirring to obtain a homogeneous solution, EtOH (25 mL), $Bu_3SnH$ (847 μL, 3.15 mmol) and paraformaldehyde (180 mg, 6.0 mmol) were added. The resulting suspension was stirred under irradiation with blue LED light (7X Osram OSLON SSL80, 455 nm (±15 nm), 20.3 V 1000mA) for 22 h, during which time the Schlenk tube was placed in a block cooled by circulating water to maintain near-ambient temperature. The resulting suspension was filtered and volatiles were removed under vacuum. To the oily residue thus obtained was added PhMe (20 mL) and degassed $H_2O$ (20 mL). The biphasic mixture was thoroughly stirred for 30 min, the toluene phase was removed, and the aqueous phase was washed with further PhMe (2 × 20 mL). Following removal of volatiles from the aqueous phase under vacuum, THP was obtained as a colorless oil (154 mg, 60%).
$\delta(^{31}P\{^1H\})$ ($D_2O$) = -23.6 ppm (s); $\delta(^1H)$ ($D_2O$) = 3.99 ppm (d, $^2J(^{31}P-^1H)$ = 5.2 Hz).

Synthesis of THPC:

To a 50 mL flat-bottomed Schlenk were added $P_4$ (62.0 mg, 0.5 mmol) and PhH (5.0 mL). After stirring to obtain a homogeneous solution, EtOH (25 mL), $Bu_3SnH$ (847 μL, 3.15 mmol) and paraformaldehyde (750 mg, 25 mmol) were added. The resulting suspension was stirred under irradiation with blue LED light (7X Osram OSLON SSL80, 455 nm (±15 nm), 20.3 V 1000mA) for 22 h, during which time the Schlenk tube was placed in a block cooled by circulating

water to maintain near-ambient temperature. The resulting mixture was frozen and HCl (4.0 M in 1,4-dioxane, 5 mL, 20 mmol) was added. After thawing, the reaction mixture was stirred for 2 h. The resulting suspension was filtered to give a colorless solution. Removal of volatiles under vacuum yielded an oily solid residue that was triturated with $Et_2O$ (20 mL) overnight to give THPC as a white solid (312 mg, 82%) after filtration, washing with additional $Et_2O$ (20 mL) and drying under vacuum.

$\delta(^1H)$ ($CD_3OD$) = 4.85 ppm (br s, OH), 4.58 ppm (d, $^2J(^{31}P-^1H)$ = 2.3 Hz, $CH_2$); $\delta(^{31}P\{^1H\})$ ($CD_3OD$) = 27.6 ppm (s); $\delta(^{31}P)$ ($CD_3OD$) = 27.6 ppm (s).

Synthesis of THPO:

To a 50 mL flat-bottomed Schlenk were added $P_4$ (62.0 mg, 0.5 mmol) and PhH (5.0 mL). After stirring to obtain a homogeneous solution, EtOH (25 mL), $Bu_3SnH$ (847 μL, 3.15 mmol) and paraformaldehyde (180 mg, 6.0 mmol) were added. The resulting suspension was stirred under irradiation with blue LED light (7X Osram OSLON SSL80, 455 nm (±15 nm), 20.3 V 1000mA) for 22 h, during which time the Schlenk tube was placed in a block cooled by circulating water to maintain near-ambient temperature. The resulting suspension was filtered and volatiles were removed under vacuum. Additional work-up was performed under air. To the oily residue obtained was added PhMe (20 mL) and $H_2O$ (20 mL). The aqueous phase was separated, washed with PhMe (3 × 15 mL), and heated to 80 °C for 2 days whilst being kept open to air. Subsequent removal of volatiles yielded THPO as a colorless oil (80 mg, 30%).

$\delta(^{31}P\{^1H\})$ ($D_2O$) = 49.7 ppm (s); $\delta(^1H)$ ($D_2O$) = 4.04 ppm (d, $^2J(^{31}P-^1H)$ = 3.0 Hz).

**Example 8: Synthesis of THPC with recovery of $Bu_3SnCl$**

(a)

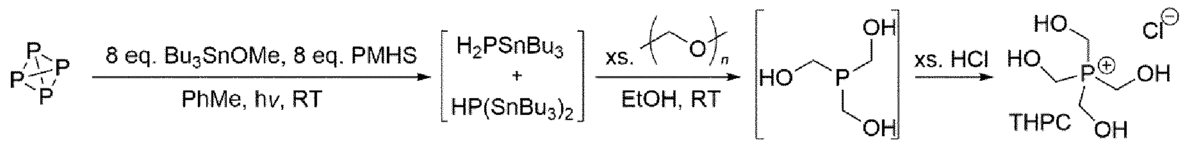


(b)

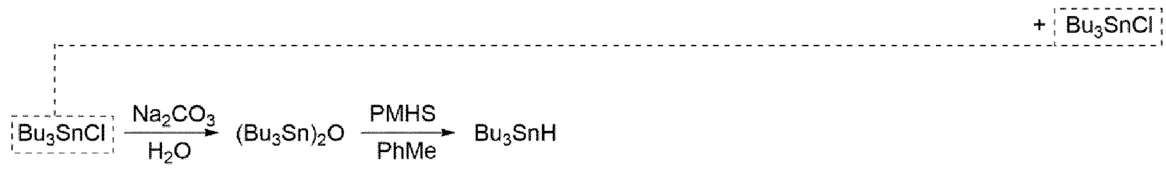


To a 50 mL flat-bottomed Schlenk were added $P_4$ (62.0 mg, 0.5 mmol), PhMe (25 mL), $Bu_3SnOMe$ (1.15 mL, 4.0 mmol), and PMHS (239 μL, 4.0 mmol). The resulting colorless, homogeneous solution was stirred under irradiation with blue LEDs (7X Osram OSLON SSL80, 455 nm (±15 nm), 20.3 V 1000mA) for 17 h, during which time the Schlenk tube was placed in a block cooled by circulating water to maintain near-ambient temperature. Volatiles were removed under vacuum and EtOH (25 mL) and paraformaldehyde (750 mg, 25 mmol) were added. The resulting colorless suspension was stirred at room temperature for 24 h. The reaction mixture was then frozen and HCl (4.0 M in 1,4-dioxane, 5 mL, 20 mmol) was added. After thawing, the reaction mixture was stirred at room temperature for a further 2 h. The resulting pale yellow suspension was filtered, and volatiles were then removed under vacuum. The resulting oily solid was triturated with pentane (20 mL) overnight, filtered, and washed with $Et_2O$ (20 mL). Drying the remaining solid under vacuum gave THPC (340 mg, 89%).

The $Bu_3SnCl$ by-product was removed simply by washing with $Et_2O$. Stirring these washes with aqueous $Na_2CO_3$ followed by phase separation and removal of solvent under vacuum yielded an oil that is confirmed by NMR spectroscopy to contain $(Bu_sSn)_2O$ as the only major observable species ($\delta(^{119}Sn)$ = 83.7 ppm in PhMe; a more minor peak at 90.5 ppm is presumed to be due to $Bu_3SnOH$). Subsequent treatment with PMHS led to formation of $Bu_3SnH$ as the only significant species observable in the $^{119}Sn\{^1H\}$ NMR spectrum (Fig. 10b).

To a 50 mL flat-bottomed Schlenk were added $P_4$ (62.0 mg, 0.5 mmol) and PhH (5.0 mL). After stirring to obtain a homogeneous solution EtOH (25 mL), $Bu_3SnH$ (847 μL, 3.15 mmol) and paraformaldehyde (750 mg, 25 mmol) were

added. The resulting suspension was stirred under irradiation with blue LED light (7X Osram OSLON SSL80, 455 nm (±15 nm), 20.3 V 1000mA) for 22 h, during which time the Schlenk tube was placed in a block cooled by circulating water to maintain near-ambient temperature. The reaction mixture was then frozen and HCl (4.0 M in 1,4-dioxane, 5 mL, 20 mmol) was added. After thawing, the reaction mixture was stirred at room temperature for a further 2 h. The resulting pale yellow suspension was filtered, and volatiles were then removed under vacuum. The resulting oily solid was triturated with $Et_2O$ (20 mL) overnight, filtered, and washed with $Et_2O$ (20 mL). Drying the remaining solid under vacuum gave THPC as a white solid (312 mg, 82%).

The organic washes were combined and volatiles removed under vacuum to give $Bu_3SnCl$ as a pale yellow oil (980 mg, 95%).

$\delta(^{119}Sn\{^1H\})$ $(CDCl_3)$ = 157.5 ppm (s).

**Example 9: Catalytic use of $R_3SnH$ (*in situ* recycling)**

(a)

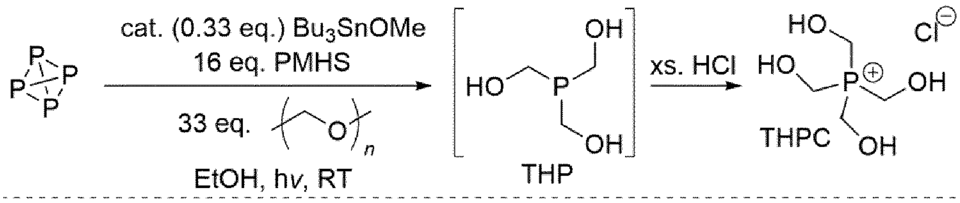


(b)

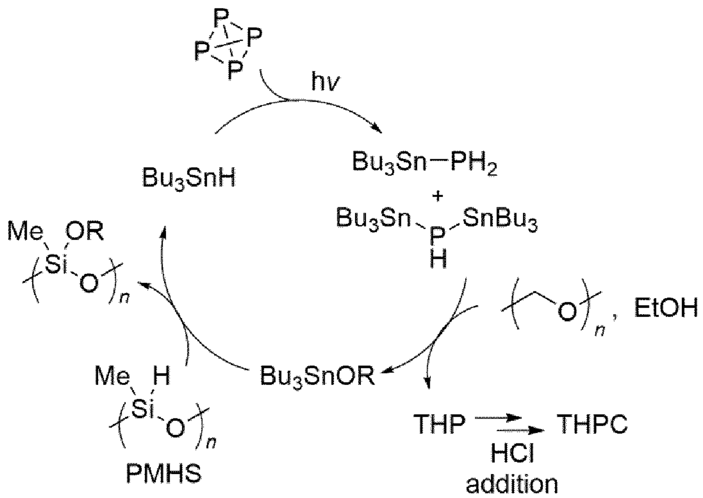


To a 10 mL flat-bottomed Schlenk were added $P_4$ (0.03 mmol, 232 μL of a stock solution in PhH), EtOH (0.5 mL), $Bu_3SnOMe$ (2.9 μL, 0.01 mmol), PMHS (28.7 μL, 0.48 mmol), and paraformaldehyde (30 mg, 1.0 mmol). The resulting colorless suspension was stirred under irradiation with near UV LEDs (365 nm) for 65 h, during which time the Schlenk tube was placed in a block cooled by circulating water to maintain near-ambient temperature. The mixture was frozen and HCl (4.0 M in 1,4-dioxane, 0.1 mL, 0.4 mmol) was added. After thawing, the mixture was stirred for 15 min, before $Ph_3PO$ (11.4 mg, 0.041 mmol) in MeCN (490 μL) was added, and the resulting mixture analyzed by quantitative, single scan, inverse-gated $^{31}P\{^1H\}$ NMR spectroscopy. Two significant resonances were observed at 32.2 ppm and 27.8 ppm, assigned to $Ph_3PO$ and THPC, respectively. Relative integration of these resonances provided the conversions of 62% to THPC, which corresponds to a turnover number of 11.2 (given the 6:1 stoichiometric ratio of the hydrostannylation reaction).

**Example 10: Comparison of different light sources**

To a 10 mL, flat-bottomed, stoppered tube was added PhMe (500 μL), $P_4$ (0.01 mmol, as a stock solution in

86.0 μL PhH) and $Bu_3SnH$ (16.1 μL, 0.06 mmol). The reaction mixture was stirred under irradiation with blue LED light (455 nm (±15 nm), 3.2 V, 700 mA, Osram OSLON SSL 80)) or near UV (365 nm) or green (528 nm) light of equivalent intensity, for 45 minutes. $^{31}P\{^1H\}$ NMR spectroscopic analysis of the resulting solutions revealed no conversion of $P_4$ to $(Bu_3Sn)_nPH_{3-n}$ for green light, but significant conversion for both blue and near UV light.

**Example 11: Synthesis of $AdC(O)PH_2$**

In a vial were combined $H_2PSnBu_3$ (19.4 mg, 0.06 mmol), $C_6D_6$ (500 μL), and AdC(O)Cl (9.9 mg, 0.05 mmol). The resulting reaction mixture was then analysed by $^{31}P\{^1H\}$ NMR spectroscopy. Aside from residual excess $H_2PSnBu_3$ and trace $PH_3$, the only major product (>90% of remaining signal intensity) was identified as $AdC(O)PH_2$.

$AdC(O)PH_2$: $\delta(^{31}P\{^1H\})$ ($C_6D_6$) = -122.2 ppm (s); $\delta(^{31}P)$ ($C_6D_6$) = -122.7 ppm (t, $^1J(^{31}P-^1H)$ = 216 Hz).

**Example 12: Synthesis of $P(SnBu_3)_3$**

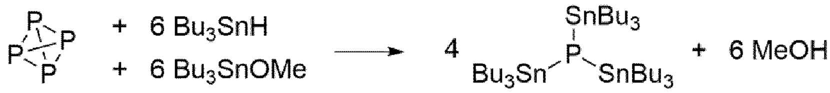

The tertiary product $P(SnBu_3)$, which is formed in only small amounts during the hydrostannylation of $P_4$, can be prepared selectively by reacting $P_4$ with 6 eq. each of $Bu_3SnH$ and $Bu_3SnOMe$, in accordance with the stoichiometric equation shown above.

To a 50 mL flat-bottomed Schlenk were added $P_4$ (62.0 mg, 0.5 mmol), PhMe (25 mL), $Bu_3SnH$ (3.0 mmol, 807 μL), and $Bu_3SnOMe$ (3.0 mmol, 864 μL). The resulting homogeneous, colorless solution was stirred under irradiation with blue LED light (7X Osram OSLON SSL80, 455 nm (±15 nm), 20.3 V 1000mA) for 24 h, during which time the Schlenk tube was placed in a block cooled by circulating water to maintain near-ambient temperature. Following removal of PhMe under vacuum, the resulting colorless oil was heated to 100 °C with stirring for 18 h. Following removal of residual starting materials under reduced pressure (100 °C, *ca.* $2 \times 10^{-2}$ mbar), $P(SnBu_3)_3$ was isolated as a colorless oil (1.53 g, 85%).

$\delta(^{31}P\{^1H\})$ ($C_6D_6$) = -346.5 ppm (s); $\delta(^{31}P)$ ($C_6D_6$) = -346.5 ppm (s); $\delta(^{119}Sn\{^1H\})$ ($C_6D_6$) = 37.6 ppm (d, $^1J(^{31}P-^{119}Sn)$ = 912 Hz).

## Claims

1. A method of preparing a phosphorus-containing compound represented by the formula $(R_3M)_nPH_{3-n}$, the method comprising:

reacting elemental phosphorus with a compound represented by the formula $R_3MH$ to provide the phosphorus-containing compound represented by the formula $(R_3M)_nPH_{3-n}$,
wherein
**R** is independently selected from the group consisting of H, $C_{1-6}$ alkyl, $C_{6-10}$ aryl, 5- to 10-membered heteroaryl, $C_{5-10}$ cycloalkyl, 5- to 10-membered heterocyclyl, OH, $OC_{1-6}$ alkyl, $OC_{6-10}$ aryl, O-(5- to 10-membered heteroaryl), O-($C_{5-10}$ cycloalkyl), O-(5- to 10-membered heterocyclyl), O-$MR^1_3$, $C_{1-6}$ alkylene-$C_{6-10}$ aryl, $C_{1-6}$ alkylene-(5- to 10-membered heteroaryl), $C_{1-6}$ alkylene-($C_{5-10}$ cycloalkyl), $C_{1-6}$ alkylene-(5- to 10-membered heterocyclyl), $C_{6-10}$ arylene-$C_{1-6}$ alkyl, 5- to 10-membered heteroarylene-$C_{1-6}$ alkyl, $C_{5-10}$ cycloalkylene-$C_{1-6}$ alkyl, 5- to 10-membered heterocyclylene-$C_{1-6}$ alkyl, $Si(C_{1-6}\ alkyl)_p(C_{6-10}\ aryl)_q$(5- to 10-membered heteroaryl)$_r$($C_{5-10}$ cycloalkyl)$_s$(5- to 10-membered heterocyclyl)$_t$, wherein p + q + r + s + t = 3, $N(C_{1-6}\ alkyl)_u(C_{6-10}\ aryl)_v$(5- to 10-membered heteroaryl)$_w$($C_{5-10}$ cycloalkyl)$_x$(5- to 10-membered heterocyclyl)$_y$,
wherein u + v + w + x + y = 2;
**$R^1$** is independently selected from the group consisting of H, $C_{1-6}$ alkyl, $C_{6-10}$ aryl, 5- to 10-membered heteroaryl, $C_{5-10}$ cycloalkyl, 5- to 10-membered heterocyclyl, OH, $OC_{1-6}$ alkyl, $OC_{6-10}$ aryl, O-(5- to 10-membered heteroaryl), O-($C_{5-10}$ cycloalkyl), O-(5- to 10-membered heterocyclyl), $C_{1-6}$ alkylene-$C_{6-10}$ aryl, $C_{1-6}$ alkylene-(5- to 10-membered heteroaryl), $C_{1-6}$ alkylene-($C_{5-10}$ cycloalkyl), $C_{1-6}$ alkylene-(5- to 10-membered heterocyclyl), $C_{6-10}$ arylene-$C_{1-6}$ alkyl, 5- to 10-membered heteroarylene-$C_{1-6}$ alkyl, $C_{5-10}$ cycloalkylene-$C_{1-6}$ alkyl, 5- to 10-membered heterocyclylene-$C_{1-6}$ alkyl, $Si(C_{1-6}\ alkyl)_p(C_{6-10}\ aryl)_q$(5- to 10-membered heteroaryl)$_r$($C_{5-10}$ cy-

cloalkyl)$_s$(5- to 10-membered heterocyclyl)$_t$, wherein p + q + r + s + t = 3, N($C_{1-6}$ alkyl)$_u$($C_{6-10}$ aryl)$_v$(5- to 10-membered heteroaryl)$_w$($C_{5-10}$ cycloalkyl)$_x$(5- to 10-membered heterocyclyl)$_y$, wherein u + v + w + x + y = 2; wherein

in R and $R^1$, $C_{1-6}$ alkyl can be optionally substituted by halogen, $OR^2$, $COR^2$, $COOR^2$, $CONR^2_2$ or $NR^2_2$ or wherein the alkyl carbon chain can be optionally interrupted by one or more -O-;
in R and $R^1$, $C_{6-10}$ aryl, 5- to 10-membered heteroaryl, $C_{5-10}$ cycloalkyl and 5- to 10-membered heterocyclyl can be optionally substituted by halogen, $C_{1-6}$ alkyl, $C_{6-10}$ aryl, $C_{5-10}$ cycloalkyl, $OR^2$, $COR^2$, $COOR^2$, $CONR^2_2$ or $NR^2_2$;
if several like ($C_{1-6}$ alkyl), ($C_{6-10}$ aryl), (5- to 10-membered heteroaryl), ($C_{5-10}$ cycloalkyl) or (5- to 10-membered heterocyclyl) groups are present in Si($C_{1-6}$ alkyl)$_p$($C_{6-10}$ aryl)$_q$(5- to 10-membered heteroaryl)$_r$($C_{5-10}$ cycloalkyl)$_s$(5- to 10-membered heterocyclyl)$_t$ or N($C_{1-6}$ alkyl)$_u$($C_{6-10}$ aryl)$_v$(5- to 10-membered heteroaryl)$_w$($C_{5-10}$ cycloalkyl)$_x$(5- to 10-membered heterocyclyl)$_y$ they can be the same or different;

**$R^2$** is independently selected from the group consisting of H, $C_{1-6}$ alkyl, $C_{6-10}$ aryl and $C_{5-10}$ cycloalkyl;
**M** is selected from the group consisting of Sn, Si and Ge; and
**n** is 0, 1, 2 and/or 3;
wherein the reaction is conducted under electromagnetic irradiation having a wavelength in the range of 100 nm to 500 nm and/or in the presence of a radical initiator.

**2.** The method according to claim 1, wherein the reaction is conducted under electromagnetic irradiation having a wavelength in the range of 100 nm to 500 nm.

**3.** The method according to claim 2, wherein the reaction is conducted at a temperature within the range of 0 to 40 °C.

**4.** The method according to claim 1, wherein the reaction is conducted in the presence of a radical initiator which is either a stable radical, preferably (2,2,6,6-tetramethylpiperidin-1-yl)oxidanyl, or a thermal radical initiator, preferably selected from the group consisting of 2,2'-azobisisobutyronitrile, tert-amyl peroxybenzoate, 4,4-azobis(4-cyanovaleric acid), 1,1'-azobis(cyclohexanecarbonitrile), benzoyl peroxide, 2,2-bis(tert-butylperoxy)butane, 1,1-bis(tert-butylperoxy)cyclohexane, 2,5-bis(tert-butylperoxy)-2,5-dimethylhexane, 2,5-bis(tert-butylperoxy)-2,5-dimethyl-3-hexyne, bis(1-(tert-butylperoxy)-1-methylethyl)benzene, 1,1-bis(tert-butylperoxy)-3,3,5-trimethylcyclohexane, tert-butyl hydroperoxide, tert-butyl peracetate, tert-butyl peroxide, tert-butyl peroxybenzoate, tert-butylperoxy isopropyl carbonate, cumene hydroperoxide, cyclohexanone peroxide, dicumyl peroxide, lauroyl peroxide, 2,4-pentanedione peroxide, peracetic acid, and potassium persulfate, more preferably 2,2'-azobisisobutyronitrile or azobis(cyclohexanecarbonitrile), or a photoinitiator.

**5.** The method according to claim 4, wherein the reaction is conducted at a temperature within the range of 0 to 150 °C.

**6.** The method according to any one of claims 1 to 5, wherein the phosphorus-containing compound represented by the formula $(R_3M)_nPH_{3-n}$ is further reacted with a compound represented by the formula R*X to provide a compound represented by the formula $R_3MX$ and a compound represented by the formula $PR^*_mH_{3-m}$ or $P(R^*)_4^+ X^-$, wherein

R, M and n are as defined in claim 1;
R* is an electrophilic moiety;
X is a halogen, a pseudohalogen or an oxygen-based leaving group; and
m = 1 to 3.

**7.** The method according to any one of claims 1 to 5, wherein the phosphorus-containing compound represented by the formula $(R_3M)_nPH_{3-n}$ is further reacted with formaldehyde and HCl to provide $[P(CH_2OH)_4]Cl$, wherein R, M and n are as defined in claim 1.

**8.** The method according to any one of claims 1 to 5, wherein the phosphorus-containing compound represented by the formula $(R_3M)_nPH_{3-n}$ is further reacted with formaldehyde and $H_2SO_4$ to provide $[P(CH_2OH)_4]_2SO_4$, wherein R, M and n are as defined in claim 1.

**9.** The method according to any one of claims 1 to 5, wherein the phosphorus-containing compound represented by the formula $(R_3M)_nPH_{3-n}$ is further reacted with R"C(O)X to provide $(R''C(O))_nPH_{3-n}$;

wherein

R, M and n are as defined in claim 1;
R" is selected from the group consisting of $C_{1-6}$ alkyl, $C_{6-10}$ aryl, $C_{1-6}$ alkylene-$C_{6-10}$ aryl, $C_{6-10}$ arylene-$C_{1-6}$ alkyl, 5- to 10-membered heteroaryl, $C_{1-6}$ alkylene-(5- to 10 membered heteroaryl), 5- to 10 membered heteroarylene-$C_{1-6}$ alkyl, $C_{5-10}$ cycloalkyl, $C_{1-6}$ alkylene-$C_{5-10}$ cycloalkyl, $C_{5-10}$ cycloalkyl-$C_{1-6}$ alkyl, 5- to 10 membered heterocyclyl, $C_{1-6}$ alkylene-5- to 10 membered heterocyclyl, 5- to 10 membered heterocyclyl-$C_{1-6}$ alkyl or H, wherein $C_{1-6}$ alkyl can be optionally substituted by halogen, $OR^2$, $COR^2$, $COOR^2$, $CONR^2_2$ or $NR^2_2$ and the alkyl carbon chain can be optionally interrupted by one or more -O-; and
$C_{6-10}$ aryl, 5- to 10-membered heteroaryl, $C_{5-10}$ cycloalkyl and 5- to 10-membered heterocyclyl can be optionally substituted by halogen, $C_{1-6}$ alkyl, $C_{6-10}$ aryl, $C_{5-10}$ cycloalkyl, $OR^2$, $COR^2$, $COOR^2$, $CONR^2_2$ or $NR^2_2$;
$R^2$ is as defined in claim 1; and
X is halogen.

**10.** The method according to any one of claims 1 to 5, wherein the phosphorus-containing compound represented by the formula $(R_3M)_nPH_{3-n}$ is further reacted with formaldehyde to provide $P(CH_2OH)_3$, wherein R, M and n are as defined in claim 1.

**11.** The method according to any one of claims 1 to 5, wherein the phosphorus-containing compound represented by the formula $(R_3M)_nPH_{3-n}$ is further reacted with an acid to provide $PH_3$, wherein R, M and n are as defined in claim 1.

**12.** The method according to any one of claims 1 to 5, wherein the phosphorus-containing compound represented by the formula $(R_3M)_nPH_{3-n}$ is further reacted with a metal salt to provide a metal phosphide or metal polyphosphide, wherein R, M and n are as defined in claim 1.

**13.** The method according to any one of claims 1 to 5, wherein the phosphorus-containing compound represented by the formula $(R_3M)_nPH_{3-n}$ is further reacted with $H_2O_2$ to provide $H_2P(O)OR^{****}$,
wherein

R, M and n are as defined in claim 1; and
$R^{****}$ is H or $MR_3$.

**14.** The method according to claim 6, wherein the compound represented by the formula $R_3MX$ is further reacted with polymethylhydrosiloxane to provide the compound represented by the formula $R_3MH$, wherein R, M and n are as defined in claim 6.

**15.** The method according to any one of claims 1 to 14, wherein the compound represented by the formula $R_3MH$ is a compound represented by the formula $R_3SnH$, $(Me_3Si)_3SiH$ or $R_3GeH$, wherein R is as defined in claim 1.

## Patentansprüche

**1.** Ein Verfahren zur Herstellung einer phosphorhaltigen Verbindung, dargestellt durch die Formel $(R_3M)_nPH_{3-n}$, wobei das Verfahren umfasst:

Umsetzen von elementarem Phosphor mit einer Verbindung, dargestellt durch die Formel $R_3MH$, um die phosphorhaltige Verbindung, dargestellt durch die Formel $(R_3M)_nPH_{3-n}$, bereitzustellen,
wobei
**R** unabhängig ausgewählt ist aus der Gruppe bestehend aus H, $C_1$-$_6$-Alkyl, $C_{6-10}$-Aryl, 5-bis 10-gliedrigem Heteroaryl, $C_{5-10}$-Cycloalkyl, 5- bis 10-gliedrigem Heterocyclyl, OH, $OC_1$-$_6$-Alkyl, $OC_{6-10}$-Aryl, O-(5- bis 10-gliedrigem Heteroaryl), O-($C_{5-10}$-Cycloalkyl), O-(5- bis 10-gliedrigem Heterocyclyl), O-$MR^1_3$, $C_{1-6}$-Alkylen-$C_{6-10}$-aryl, $C_{1-6}$-Alkylen-(5-bis 10-gliedrigem Heteroaryl), $C_{1-6}$-Alkylen-($C_{5-10}$-cycloalkyl), $C_{1-6}$-Alkylen-(5-bis 10-gliedrigem Heterocyclyl), $C_{6-10}$-Arylen-$C_1$-$_6$-alkyl, 5- bis 10-gliedrigem Heteroarylen-$C_1$-$_6$-alkyl, $C_{5-10}$-Cycloalkylen-$C_1$-$_6$-alkyl, 5- bis 10-gliedrigem Heterocyclylen-$C_1$-$_6$-alkyl, $Si(C_1$-$_6$-$Alkyl)_p(C_{6-10}$-$aryl)_q$(5- bis 10-gliedrigem $Heteroaryl)_r(C_{5-10}$-$cycloalkyl)_s$(5- bis 10-gliedrigem $Heterocyclyl)_t$, wobei p + q + r + s + t = 3, $N(C_1$-$_6$-$Alkyl)_u(C_{6-10}$-$aryl)_v$(5-bis 10-gliedrigem $Heteroaryl)_w(C_{5-10}$-$cycloalkyl)_x$(5- bis 10-gliedrigem $Heterocyclyl)_y$, wobei u + v + w + x + y = 2;
**$R^1$** unabhängig ausgewählt ist aus der Gruppe bestehend aus H, $C_1$-$_6$-Alkyl, $C_{6-10}$-Aryl, 5- bis 10-gliedrigem

Heteroaryl, $C_{5-10}$-Cycloalkyl, 5- bis 10-gliedrigem Heterocyclyl, OH, $OC_{1-6}$-Alkyl, $OC_{6-10}$-Aryl, O-(5- bis 10-gliedrigem Heteroaryl), O-($C_{5-10}$-Cycloalkyl), O-(5- bis 10-gliedrigem Heterocyclyl), $C_{1-6}$-Alkylen-$C_{6-10}$-aryl, $C_{1-6}$-Alkylen-(5- bis 10-gliedrigem Heteroaryl), $C_{1-6}$-Alkylen-($C_{5-10}$-cycloalkyl), $C_{1-6}$-Alkylen-(5- bis 10-gliedrigem Heterocyclyl), $C_{6-10}$-Arylen-$C_{1-6}$-alkyl, 5- bis 10-gliedrigem Heteroarylen-$C_{1-6}$-alkyl, $C_{5-10}$-Cycloalkylen-$C_{1-6}$-alkyl, 5- bis 10-gliedrigem Heterocyclylen-$C_{1-6}$-alkyl, $Si(C_{1-6}\text{-Alkyl})_p(C_{6-10}\text{-aryl})$,(5- bis 10-gliedrigem Heteroaryl)$_r$($C_{5-10}$-cycloalkyl)$_s$(5- bis 10-gliedrigem Heterocyclyl)$_t$, wobei p + q + r + s + t = 3, $N(C_{1-6}\text{-Alkyl})_u(C_{6-10}\text{-aryl})_v$(5- bis 10-gliedrigem Heteroaryl)$_w$($C_{5-10}$-cycloalkyl)$_x$(5- bis 10-gliedrigem Heterocyclyl)$_y$, wobei

$$u + v + w + x + y = 2;$$

wobei

in R und R[1], $C_{1-6}$-Alkyl gegebenenfalls mit Halogen, $OR^2$, $COR^2$, $COOR^2$, $CONR^2_2$ oder $NR^2_2$ substituiert sein kann oder wobei die Alkylkohlenstoffkette gegebenenfalls mit einem oder mehreren -O- unterbrochen sein kann;

in R und R[1], $C_{6-10}$-Aryl, 5- bis 10-gliedriges Heteroaryl, $C_{5-10}$-Cycloalkyl und 5- bis 10-gliedriges Heterocyclyl gegebenenfalls mit Halogen, $C_{1-6}$-Alkyl, $C_{6-10}$-Aryl, $C_{5-10}$-Cycloalkyl, $OR^2$, $COR^2$, $COOR^2$, $CONR^2_2$ oder $NR^2_2$ substituiert sein können;

wenn mehrere, wie ($C_{1-6}$-Alkyl)-, ($C_{6-10}$-Aryl)-, (5- bis 10-gliedrige Heteroaryl)-, ($C_{5-10}$-Cycloalkyl)- oder (5- bis 10-gliedrige Heterocyclyl)-Gruppen in $Si(C_{1-6}\text{-Alkyl})_p(C_{6-10}\text{-aryl})_q$(5- bis 10-gliedrigem Heteroaryl)$_r$($C_{5-10}$-cycloalkyl)$_s$(5- bis 10-gliedrigem Heterocyclyl)$_t$ oder $N(C_{1-6}\text{-Alkyl})_u(C_{6-10}\text{-aryl})_v$(5- bis 10-gliedrigem Heteroaryl)$_w$($C_{5-10}$-cycloalkyl)$_x$(5- bis 10-gliedrigem Heterocyclyl)$_y$ vorliegen, diese gleich oder verschieden sein können;

**$R^2$** unabhängig ausgewählt ist aus der Gruppe bestehend aus H, $C_{1-6}$-Alkyl, $C_{6-10}$-Aryl und $C_{5-10}$-Cycloalkyl;
**M** ausgewählt ist aus der Gruppe bestehend aus Sn, Si und Ge; und
**n** gleich 0, 1, 2 und/oder 3 ist;
wobei die Umsetzung unter elektromagnetischer Bestrahlung mit einer Wellenlänge im Bereich von 100 nm bis 500 nm und/oder in Gegenwart eines Radikalinitiators durchgeführt wird.

**2.** Das Verfahren gemäß Anspruch 1, wobei die Umsetzung unter elektromagnetischer Bestrahlung mit einer Wellenlänge im Bereich von 100 nm bis 500 nm durchgeführt wird.

**3.** Das Verfahren gemäß Anspruch 2, wobei die Umsetzung bei einer Temperatur im Bereich von 0 bis 40 °C durchgeführt wird.

**4.** Das Verfahren gemäß Anspruch 1, wobei die Umsetzung in Gegenwart eines Radikalinitiators durchgeführt wird, welcher entweder ein stabiles Radikal, vorzugsweise (2,2,6,6-Tetramethylpiperidin-1-yl)oxidanyl, oder ein thermischer Radikalinitiator, vorzugsweise ausgewählt aus der Gruppe bestehend aus 2,2'-Azobisisobutyronitril, tert-Amylperoxybenzoat, 4,4-Azobis(4-cyanovaleriansäure), 1,1'-Azobis(cyclohexancarbonitril), Benzoylperoxid, 2,2-bis(tert-Butylperoxy)butan, 1,1-bis(tert-Butylperoxy)cyclohexan, 2,5-bis(tert-Butylperoxy)-2,5-dimethylhexan, 2,5-bis(tert-Butylperoxy)-2,5-dimethyl-3-hexin, bis(1-(tert-Butylperoxy)-1-methyl-ethyl)benzen, 1,1-bis(tert-Butylperoxy)-3,3,5-trimethylcyclohexan, tert-Butylhydroperoxid, tert-Butylperacetat, tert-Butylperoxid, tert-Butylperoxybenzoat, tert-Butylperoxyisopropylcarbonat, Cumenhydroperoxid, Cyclohexanonperoxid, Dicumylperoxid, Lauroylperoxid, 2,4-Pentandionperoxid, Peressigsäure und Kaliumpersulfat, stärker bevorzugt 2,2'-Azobisisobutyronitril oder Azobis(cyclohexancarbonitril), oder ein Photoinitiator ist.

**5.** Das Verfahren gemäß Anspruch 4, wobei die Umsetzung bei einer Temperatur im Bereich von 0 bis 150 °C durchgeführt wird.

**6.** Das Verfahren gemäß einem der Ansprüche 1 bis 5, wobei die phosphorhaltige Verbindung, dargestellt durch die Formel $(R_3M)_nPH_{3-n}$, weiter mit einer Verbindung, dargestellt durch die Formel R*X, umgesetzt wird, um eine Verbindung, dargestellt durch die Formel $R_3MX$, und eine Verbindung, dargestellt durch die Formel $PR^*_mH_{3-m}$ oder $P(R^*)_4^+ X^-$, bereitzustellen,
wobei

R, M und n wie in Anspruch 1 definiert sind;

R* eine elektrophile Einheit ist;
X ein Halogen, ein Pseudohalogen oder eine Abgangsgruppe auf Sauerstoffbasis ist; und
m = 1 bis 3.

**7.** Das Verfahren gemäß einem der Ansprüche 1 bis 5, wobei die phosphorhaltige Verbindung, dargestellt durch die Formel $(R_3M)_nPH_{3-n}$, weiter mit Formaldehyd und HCl umgesetzt wird, um $[P(CH_2OH)_4]Cl$ bereitzustellen, wobei R, M und n wie in Anspruch 1 definiert sind.

**8.** Das Verfahren gemäß einem der Ansprüche 1 bis 5, wobei die phosphorhaltige Verbindung, dargestellt durch die Formel $(R_3M)_nPH_{3-n}$, weiter mit Formaldehyd und $H_2SO_4$ umgesetzt wird, um $[P(CH_2OH)_4]_2SO_4$ bereitzustellen, wobei R, M und n wie in Anspruch 1 definiert sind.

**9.** Das Verfahren gemäß einem der Ansprüche 1 bis 5, wobei die phosphorhaltige Verbindung, dargestellt durch die Formel $(R_3M)_nPH_{3-n}$, weiter mit R"C(O)X umgesetzt wird, um $(R"C(O))_nPH_{3-n}$ bereitzustellen; wobei

R, M und n wie in Anspruch 1 definiert sind;
R" ausgewählt ist aus der Gruppe bestehend aus $C_{1-6}$-Alkyl, $C_{6-10}$-Aryl, $C_{1-6}$-Alkylen-$C_{6-10}$-aryl, $C_{6-10}$-Arylen-$C_{1-6}$-alkyl, 5- bis 10-gliedrigem Heteroaryl, $C_{1-6}$-Alkylen-(5- bis 10-gliedrigem Heteroaryl), 5- bis 10-gliedrigem Heteroarylen-$C_{1-6}$-alkyl, $C_{5-10}$-Cycloalkyl, $C_{1-6}$-Alkylen-$C_{5-10}$-cycloalkyl, $C_{5-10}$-Cycloalkyl-$C_{1-6}$-alkyl, 5- bis 10-gliedrigem Heterocyclyl, $C_{1-6}$-Alkylen-5- bis 10-gliedrigem Heterocyclyl, 5- bis 10-gliedrigem Heterocyclyl-$C_{1-6}$-alkyl oder H,
wobei $C_1$-$_6$-Alkyl gegebenenfalls mit Halogen, $OR^2$, $COR^2$, $COOR^2$, $CONR^2{}_2$ oder $NR^2{}_2$ substituiert sein kann und die Alkylkohlenstoffkette gegebenenfalls mit einem oder mehreren -O- unterbrochen sein kann; und
$C_{6-10}$-Aryl, 5- bis 10-gliedriges Heteroaryl, $C_{5-10}$-Cycloalkyl und 5- bis 10-gliedriges Heterocyclyl gegebenenfalls mit Halogen, $C_{1-6}$-Alkyl, $C_{6-10}$-Aryl, $C_{5-10}$-Cycloalkyl, $OR^2$, $COR^2$, $COOR^2$, $CONR^2{}_2$ oder $NR^2{}_2$ substituiert sein können;
$R^2$ wie in Anspruch 1 definiert ist; und
X Halogen ist.

**10.** Das Verfahren gemäß einem der Ansprüche 1 bis 5, wobei die phosphorhaltige Verbindung, dargestellt durch die Formel $(R_3M)_nPH_{3-n}$, weiter mit Formaldehyd umgesetzt wird, um $P(CH_2OH)_3$ bereitzustellen, wobei R, M und n wie in Anspruch 1 definiert sind.

**11.** Das Verfahren gemäß einem der Ansprüche 1 bis 5, wobei die phosphorhaltige Verbindung, dargestellt durch die Formel $(R_3M)_nPH_{3-n}$, weiter mit einer Säure umgesetzt wird, um $PH_3$ bereitzustellen, wobei R, M und n wie in Anspruch 1 definiert sind.

**12.** Das Verfahren gemäß einem der Ansprüche 1 bis 5, wobei die phosphorhaltige Verbindung, dargestellt durch die Formel $(R_3M)_nPH_{3-n}$, weiter mit einem Metallsalz umgesetzt wird, um ein Metallphosphid oder Metallpolyphosphid bereitzustellen, wobei R, M und n wie in Anspruch 1 definiert sind.

**13.** Das Verfahren gemäß einem der Ansprüche 1 bis 5, wobei die phosphorhaltige Verbindung, dargestellt durch die Formel $(R_3M)_nPH_{3-n}$, weiter mit $H_2O_2$ umgesetzt wird, um $H_2P(O)OR^{****}$ bereitzustellen, wobei

R, M und n wie in Anspruch 1 definiert sind; und
R**** gleich H oder $MR_3$ ist.

**14.** Das Verfahren gemäß Anspruch 6, wobei die Verbindung, dargestellt durch die Formel $R_3MX$, weiter mit Polymethylhydrosiloxan umsetzt wird, um die Verbindung, dargestellt durch die Formel $R_3MH$, bereitzustellen, wobei R, M und n wie in Anspruch 6 definiert sind.

**15.** Das Verfahren gemäß einem der Ansprüche 1 bis 14, wobei die Verbindung, dargestellt durch die Formel $R_3MH$, eine Verbindung ist, dargestellt durch die Formel $R_3SnH$, $(Me_3Si)_3SiH$ oder $R_3GeH$, wobei R wie in Anspruch 1 definiert ist.

## Revendications

1. Méthode de préparation d'un composé contenant du phosphore représenté par la formule $(R_3M)_nPH_{3-n}$, la méthode comprenant :

   la réaction de phosphore élémentaire avec un composé représenté par la formule $R_3MH$ pour former le composé contenant du phosphore représenté par la formule $(R_3M)_nPH_{3-n}$, dans laquelle
   R est indépendamment choisi dans l'ensemble constitué par H, alkyle en $C_1$ à $C_6$, aryle en $C_6$ à $C_{10}$, hétéroaryle à 5 à 10 chaînons, cycloalkyle en $C_5$ à $C_{10}$, hétérocyclyle à 5 à 10 chaînons, OH, O-alkyle en $C_1$ à $C_6$, O-aryle en $C_6$ à $C_{10}$, O-hétéroaryle à 5 à 10 chaînons, O-cycloalkyle en $C_5$ à $C_{10}$, O-hétérocyclyle à 5 à 10 chaînons, O-$MR^1_3$, (alkylène en $C_1$ à $C_6$)-aryle en $C_6$ à $C_{10}$, (alkylène en $C_1$ à $C_6$)-hétéroaryle à 5 à 10 chaînons, (alkylène en $C_1$ à $C_6$)-cycloalkyle en $C_5$ à $C_{10}$, (alkylène en $C_1$ à $C_6$)-hétérocyclyle à 5 à 10 chaînons, (arylène en $C_6$ à $C_{10}$)-alkyle en $C_1$ à $C_6$, (hétéroarylène à 5 à 10 chaînons)-alkyle en $C_1$ à $C_6$, (cycloalkylène en $C_5$ à $C_{10}$)-alkyle en $C_1$ à $C_6$, (hétérocyclylène à 5 à 10 chaînons)-alkyle en $C_1$ à $C_6$, Si-(alkyle en $C_1$ à $C_6)_p$-(aryle en $C_6$ à $C_{10})_q$-(hétéroaryle à 5 à 10 chaînons)$_r$-(cycloalkyle en $C_5$ à $C_{10})_s$-(hétérocyclyle à 5 à 10 chaînons)$_t$ où $p + q + r + s + t = 3$, N-(alkyle en $C_1$ à $C_6)_u$-(aryle en $C_6$ à $C_{10})_v$-(hétéroaryle à 5 à 10 chaînons)$_w$-(cycloalkyle en $C_5$ à $C_{10})_x$-(hétérocyclyle à 5 à 10 chaînons)$_y$ où $u + v + w + x + y = 2$;
   $R^1$ est indépendamment choisi dans l'ensemble constitué par H, alkyle en $C_1$ à $C_6$, aryle en $C_6$ à $C_{10}$, hétéroaryle à 5 à 10 chaînons, cycloalkyle en $C_5$ à $C_{10}$, hétérocyclyle à 5 à 10 chaînons, OH, O-alkyle en $C_1$ à $C_6$, O-aryle en $C_6$ à $C_{10}$, O-hétéroaryle à 5 à 10 chaînons, O-cycloalkyle en $C_5$ à $C_{10}$, O-hétérocyclyle à 5 à 10 chaînons, (alkylène en $C_1$ à $C_6$)-aryle en $C_6$ à $C_{10}$, (alkylène en $C_1$ à $C_6$)-hétéroaryle à 5 à 10 chaînons, (alkylène en $C_1$ à $C_6$)-cycloalkyle en $C_5$ à $C_{10}$, (alkylène en $C_1$ à $C_6$)-hétérocyclyle à 5 à 10 chaînons, (arylène en $C_6$ à $C_{10}$)-alkyle en $C_1$ à $C_6$, (hétéroarylène à 5 à 10 chaînons)-alkyle en $C_1$ à $C_6$, (cycloalkylène en $C_5$ à $C_{10}$)-alkyle en $C_1$ à $C_6$, (hétérocyclylène à 5 à 10 chaînons)-alkyle en $C_1$ à $C_6$, Si-(alkyle en $C_1$ à $C_6)_p$-(aryle en $C_6$ à $C_{10})_q$-(hétéroaryle à 5 à 10 chaînons)$_r$-(cycloalkyle en $C_5$ à $C_{10})_s$-(hétérocyclyle à 5 à 10 chaînons)$_t$ où $p + q + r + s + t = 3$, N-(alkyle en $C_1$ à $C_6)_u$-(aryle en $C_6$ à $C_{10})_v$-(hétéroaryle à 5 à 10 chaînons)$_w$-(cycloalkyle en $C_5$ à $C_{10})_x$-(hétérocyclyle à 5 à 10 chaînons)$_y$ où $u + v + w + x + y = 2$ ;
   dans laquelle
   dans R et $R^1$, l'alkyle en $C_1$ à $C_6$ peut être éventuellement substitué par un halogène, $OR^2$, $COR^2$, $COOR^2$, $CONR^2_2$, ou $NR^2_2$ ou bien la chaîne carbonée alkyle peut être éventuellement interrompue par un ou plusieurs -O- ;
   dans R et $R^1$, l'aryle en $C_6$ à $C_{10}$, l'hétéroaryle à 5 à 10 chaînons, le cycloalkyle en $C_5$ à $C_{10}$, et l'hétérocyclyle à 5 à 10 chaînons peuvent être éventuellement substitués par un halogène, alkyle en $C_1$ à $C_6$, aryle en $C_6$ à $C_{10}$, cycloalkyle en $C_5$ à $C_{10}$, $OR^2$, $COR^2$, $COOR^2$, $CONR^2_2$ ou $NR^2_2$ ;
   si plusieurs groupes alkyle en $C_1$ à $C_6$, aryle en $C_6$ à $C_{10}$, hétéroaryle à 5 à 10 chaînons, cycloalkyle en $C_5$ à $C_{10}$ ou hétérocyclyle à 5 à 10 chaînons sont présents dans le Si-(alkyle en $C_1$ à $C_6)_p$-(aryle en $C_6$ à $C_{10})_q$-(hétéroaryle à 5 à 10 chaînons)$_r$-(cycloalkyle en $C_5$ à $C_{10})_s$-(hétérocyclyle à 5 à 10 chaînons)$_t$ ou N-(alkyle en $C_1$ à $C_6)_u$-(aryle en $C_6$ à $C_{10})_v$-(hétéroaryle à 5 à 10 chaînons)$_w$-(cycloalkyle en $C_5$ à $C_{10})_x$-(hétérocyclyle à 5 à 10 chaînons)$_y$, ils peuvent être identiques ou différents ;
   $R^2$ est indépendamment choisi dans l'ensemble constitué par H, alkyle en $C_1$ à $C_6$, aryle en $C_6$ à $C_{10}$ et cycloalkyle en $C_5$ à $C_{10}$ ;
   M est choisi dans l'ensemble constitué par Sn, Si et Ge ; et
   n vaut 0, 1, 2 et/ou 3 ;
   dans laquelle la réaction est effectuée sous irradiation électromagnétique à une longueur d'onde située dans la plage allant de 100 nm à 500 nm et/ou en présence d'un amorceur radicalaire.

2. Méthode selon la revendication 1, dans laquelle la réaction est effectuée sous irradiation électromagnétique à une longueur d'onde située dans la plage allant de 100 nm à 500 nm.

3. Méthode selon la revendication 2, dans laquelle la réaction est effectuée à une température située dans la plage allant de 0 à 40 °C.

4. Méthode selon la revendication 1, dans laquelle la réaction est effectuée en présence d'un amorceur radicalaire qui est soit un radical stable, de préférence (2,2,6,6-tétraméthylpipéridin-1-yl)oxidanyle, soit un amorceur radicalaire thermique, de préférence choisi dans l'ensemble constitué par le 2,2'-azobisisobutyronitrile, le peroxybenzoate de tert-amyle, l'acide 4,4-azobis(4-cyanovalérique), le 1,1'-azobis(cyclohexanecarbonitrile), le peroxyde de benzoyle, le 2,2-bis(tert-butylperoxy)butane, le 1,1-bis(tert-butylperoxy)cyclohexane, le 2,5-bis(tert-butylperoxy)-2,5-diméthylhexane, le 2,5-bis(tert-butylperoxy)-2,5-diméthyl-3-hexyne, le bis(1-(tert-butylperoxy)-1-méthyléthyl)benzène, le

1,1-bis(tert-butylperoxy)-3,3,5-triméthylcyclohexane, l'hydroperoxyde de tert-butyle, le peracétate de tert-butyle, le peroxyde de tert-butyle, le peroxybenzoate de tert-butyle, le carbonate de tert-butylperoxyisopropyle, l'hydroperoxyde de cumène, le peroxyde de cyclohexanone, le peroxyde de dicumyle, le peroxyde de lauroyle, le peroxyde de 2,4-pentanedione, l'acide peracétique, et le persulfate de potassium, mieux encore le 2,2'-azobisisobutyronitrile ou l'azobis(cyclohexanecarbonitrile), soit un photoamorceur.

**5.** Méthode selon la revendication 4, dans laquelle la réaction est effectuée à une température située dans la plage allant de 0 à 150 °C.

**6.** Méthode selon l'une quelconque des revendications 1 à 5, dans laquelle le composé contenant du phosphore représenté par la formule $(R_3M)_nPH_{3-n}$ est en outre mis à réagir avec un composé représenté par la formule R*X pour former un composé représenté par la formule $R_3MX$ et un composé représenté par la formule $PR^*_mH_{3-m}$ ou $P(R^*)_4{}^+X^-$, dans laquelle

R, M et n sont tels que définis dans la revendication 1 ;
R* est un fragment électrophile ;
X est un halogène, un pseudo-halogène ou un groupe partant à base d'oxygène ; et
m = 1 à 3.

**7.** Méthode selon l'une quelconque des revendications 1 à 5, dans laquelle le composé contenant du phosphore représenté par la formule $(R_3M)_nPH_{3-n}$ est en outre mis à réagir avec du formaldéhyde et du HCl pour former $[P(CH_2OH)_4]Cl$, dans laquelle R, M et n sont tels que définis dans la revendication 1.

**8.** Méthode selon l'une quelconque des revendications 1 à 5, dans laquelle le composé contenant du phosphore représenté par la formule $(R_3M)_nPH_{3-n}$ est en outre mis à réagir avec du formaldéhyde et du $H_2SO_4$ pour former $[P(CH_2OH)_4]_2SO_4$, dans laquelle R, M et n sont tels que définis dans la revendication 1.

**9.** Méthode selon l'une quelconque des revendications 1 à 5, dans laquelle le composé contenant du phosphore représenté par la formule $(R_3M)_nPH_{3-n}$ est en outre mis à réagir avec R"C(O)X pour former $(R"C(O))_nPh_{3-n}$ ; dans laquelle

R, M et n sont tels que définis dans la revendication 1 ;
R" est choisi dans l'ensemble constitué par alkyle en $C_1$ à $C_6$, aryle en $C_6$ à $C_{10}$, (alkylène en $C_1$ à $C_6$)-aryle en $C_6$ à $C_{10}$, (arylène en $C_6$ à $C_{10}$)-alkyle en $C_1$ à $C_6$, hétéroaryle à 5 à 10 chaînons, (alkylène en $C_1$ à $C_6$)-hétéroaryle à 5 à 10 chaînons, (hétéroarylène à 5 à 10 chaînons)-alkyle en $C_1$ à $C_6$, cycloalkyle en $C_5$ à $C_{10}$, (alkylène en $C_1$ à $C_6$)-cycloalkyle en $C_5$ à $C_{10}$, (cycloalkyle en $C_5$ à $C_{10}$)-alkyle en $C_1$ à $C_6$, hétérocyclyle à 5 à 10 chaînons, (alkylène en $C_1$ à $C_6$)-hétérocyclyle à 5 à 10 chaînons, (hétérocyclyle à 5 à 10 chaînons)-alkyle en $C_1$ à $C_6$ ou H,
dans laquelle l'alkyle en $C_1$ à $C_6$ peut être éventuellement substitué par un halogène, $OR^2$, $COR^2$, $COOR^2$, $CONR^2{}_2$ ou $NR^2{}_2$ et la chaîne carbonée alkyle peut être éventuellement interrompue par un ou plusieurs -O- ; et l'aryle en $C_6$ à $C_{10}$, l'hétéroaryle à 5 à 10 chaînons, le cycloalkyle en $C_5$ à $C_{10}$ et l'hétérocyclyle à 5 à 10 chaînons peuvent être éventuellement substitués par un halogène, alkyle en $C_1$ à $C_6$, aryle en $C_6$ à $C_{10}$, cycloalkyle en $C_5$ à $C_{10}$, $OR^2$, $COR^2$, $COOR^2$, $CONR^2{}_2$ ou $NR^2{}_2$ ;
$R^2$ est tel que défini dans la revendication 1 ; et
X est un halogène.

**10.** Méthode selon l'une quelconque des revendications 1 à 5, dans laquelle le composé contenant du phosphore représenté par la formule $(R_3M)_nPH_{3-n}$ est en outre mis à réagir avec du formaldéhyde pour former $P(CH_2OH)_3$, dans laquelle R, M et n sont tels que définis dans la revendication 1.

**11.** Méthode selon l'une quelconque des revendications 1 à 5, dans laquelle le composé contenant du phosphore représenté par la formule $(R_3M)_nPH_{3-n}$ est en outre mis à réagir avec un acide pour former $PH_3$, dans laquelle R, M et n sont tels que définis dans la revendication 1.

**12.** Méthode selon l'une quelconque des revendications 1 à 5, dans laquelle le composé contenant du phosphore représenté par la formule $(R_3M)_nPH_{3-n}$ est en outre mis à réagir avec un sel métallique pour former un phosphure métallique ou un polyphosphure métallique, dans laquelle R, M et n sont tels que définis dans la revendication 1.

**13.** Méthode selon l'une quelconque des revendications 1 à 5, dans laquelle le composé contenant du phosphore représenté par la formule $(R_3M)_nPH_{3-n}$ est en outre mis à réagir avec $H_2O_2$ pour former $H_2P(O)OR^{****}$, dans laquelle

R, M et n sont tels que définis dans la revendication 1 ; et
$R^{****}$ est H ou $MR_3$.

**14.** Méthode selon la revendication 6, dans laquelle le composé représenté par la formule $R_3MX$ est en outre mis à réagir avec du polyméthylhydrosiloxane pour former le composé représenté par la formule $R_3MH$, dans laquelle R, M et n sont tels que définis dans la revendication 6.

**15.** Méthode selon l'une quelconque des revendications 1 à 14, dans laquelle le composé représenté par la formule $R_3MH$ est un composé représenté par la formule $R_3SnH$, $(Me_3Si)_3SiH$ ou $R_3GeH$, dans laquelle R est tel que défini dans la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013114311 A


### Non-patent literature cited in the description


- *JOM,* 2007, vol. 59, 17
- *Angew. Chem. Int. Ed. Engl.,* 1978, vol. 17 (10), 767
- *Chem. Rev.,* 2010, vol. 110 (7), 4164-4177
- *Chem. Rev.,* 2010, vol. 110 (7), 4178-4235
- *Chem. Rev.,* 2010, vol. 110 (7), 4236-4256
- *Inorg. Chem.,* 2014, vol. 53, 3678-3687